# EUROPEAN PATENT APPLICATION

(11) **EP 4 019 112 A1**
(43) Date of publication of application: **29.06.2022**
(21) Application number: 21787936.0
(22) Date of filing: 24.02.2021
(51) Int. Cl.: B01D 47/00, B63H 21/32

(54) **EXHAUST GAS TREATMENT DEVICE FOR SHIPS**

(30) Priority: 15.04.2020 JP 2020073150
(71) Applicant: Fuji Electric Co., Ltd., Kawasaki-shi, Kanagawa 210-9530 (JP)
(72) Inventor: ITOKAWA Kazuyoshi, Kawasaki-shi, Kanagawa 210-9530 (JP); TAKAHASHI Kuniyuki, Kawasaki-shi, Kanagawa 210-9530 (JP)
(74) Representative: MERH-IP Matias Erny Reichl Hoffmann Patentanwälte PartG mbB
(86) International application number: PCT/JP2021/006831
(87) International publication number: WO 2021/210272

(57) **Abstract**

Provided is an exhaust gas treatment apparatus for ships including: a reaction tower supplied with exhaust gas containing particle matter and with liquid for treating the exhaust gas and configured to discharge exhausted liquid obtained by treating the exhaust gas; and a heating unit configured to heat discharged material containing the exhausted liquid to evaporate at least a part of moisture contained in the discharged material. The exhaust gas treatment apparatus for ships may further include a first storage unit configured to store first discharged material containing the particle matter removed from the exhausted liquid and a part of the exhausted liquid. The heating unit may heat the first storage unit. The exhaust gas treatment apparatus for ships may further include a second storage unit configured to store second discharged material containing the exhausted liquid from which at least a part of the particle matter has been removed. The heating unit may heat the second storage unit.

## Description

### BACKGROUND

### 1. TECHNICAL FIELD

The present invention relates to an exhaust gas treatment apparatus for ships.

### 2. RELATED ART

A sewage sludge treatment method and apparatus has been known in the prior art for heating sewage sludge to decrease an water content rate of the sewage sludge (see Patent Documents 1 and 2, for example).
Patent Document 1: Japanese Patent No. 5027697.
Patent Document 1: Japanese Patent Application Publication No. 2007-196931.

### TECHNICAL PROBLEM

In an exhaust gas treatment apparatus for ships, it is preferable to adequately control water quality of discharged water obtained by treating exhaust gas.

### GENERAL DISCLOSURE

In a first aspect of the present invention, an exhaust gas treatment apparatus for ships is provided. The exhaust gas treatment apparatus for ships includes: a reaction tower supplied with exhaust gas containing particle matter and with liquid for treating the exhaust gas and configured to discharge exhausted liquid obtained by treating the exhaust gas; and a heating unit configured to heat discharged material containing the exhausted liquid to evaporate at least a part of moisture contained in the discharged material.

The exhaust gas treatment apparatus for ships may further include a first storage unit configured to store first discharged material containing the particle matter removed from the exhausted liquid and a part of the exhausted liquid. The heating unit may heat the first storage unit.

The exhaust gas treatment apparatus for ships may further include a second storage unit configured to store second discharged material containing the exhausted liquid from which at least a part of the particle matter has been removed. The heating unit may heat the second storage unit.

The exhaust gas treatment apparatus for ships may further include a first storage unit configured to store the first discharged material containing the particle matter removed from the exhausted liquid and a part of the exhausted liquid and a second storage unit configured to store the second discharged material containing the exhausted liquid from which at least a part of the particle matter has been removed.

The heating unit may heat at least one of the first storage unit and the second storage unit.

The heating unit may heat the first storage unit and the second storage unit respectively at a first temperature and a second temperature. The first temperature may be higher than the second temperature.

The heating unit may heat the first storage unit and the second storage unit respectively for a first period and a second period. The first period may be longer than the second period.

The first storage unit may have a plurality of storage tanks for storing the first discharged material. The heating unit may control, based on a content rate of moisture contained by the first discharged material stored in each of the plurality of storage tanks, temperature at which each of the plurality of storage tanks is heated.

The exhaust gas treatment apparatus for ships may further include a separation unit introduced with the exhausted liquid and configured to separate the moisture contained in the exhausted liquid and the particle matter. The particle matter separated by the separation unit may be introduced into the first storage unit.

The heating unit may heat the first storage unit at a first temperature. The heating unit may heat the separation unit at a third temperature higher than the first temperature.

The exhaust gas treatment apparatus for ships may further include: a power unit configured to discharge the exhaust gas; and a first heat exchanger. The first heat exchanger may exchange heat of the exhausted liquid and heat generated by the power unit.

The exhaust gas treatment apparatus for ships may further include a second heat exchanger configured to exchange the heat of the exhausted liquid and heat of the first discharged material.

The exhaust gas treatment apparatus for ships may further include a condensation unit. The heating unit may heat the first storage unit, so that first vapor is generated which is obtained by evaporating at least a part of the exhausted liquid contained in the first discharged material stored in the first storage unit.

The heating unit may heat the second storage unit, so that second vapor is generated which is obtained by evaporating at least a part of the exhausted liquid contained in the second discharged material stored in the second storage unit.

The condensation unit may condense at least one of the first vapor and the second vapor.

The exhaust gas treatment apparatus for ships may further include a switching control unit configured to make a switch between supply and non-supply of the exhausted liquid to the reaction tower.

The heating unit may start heating of at least one of the first storage unit and the second storage unit, before the switching control unit makes a switch such that the exhausted liquid is supplied to the reaction tower.

At least one of the first storage unit and the second storage unit may have at least one of a gas supply unit, an air sending unit, and a pressure control unit. When the first storage unit has at least one of the gas supply unit, the air sending unit, and the pressure control unit, the gas supply unit may supply gas into the first discharged material, the air sending unit may send air to the first discharged material, and the pressure control unit may control pressure inside the first storage unit. When the second storage unit has at least one of the gas supply unit, the air sending unit, and the pressure control unit, the gas supply unit may supply gas into the second discharged material, the air sending unit may send air to the second discharged material, and the pressure control unit may control pressure inside the second storage unit.

The reaction tower may be mounted on a ship. The heating unit may control the heating of at least one of the first storage unit and the second storage unit based on a navigation schedule of the ship.

The heating unit may heat the first storage unit in at least one of before the ship arrives in port and while the ship is anchored in port.

The heating unit may heat the second storage unit before the ship leaves port.

The exhaust gas treatment apparatus for ships may further include a positional information obtainment unit configured to obtain a current position of the ship. The heating unit may control the heating of at least one of the first storage unit and the second storage unit based on the current position of the ship obtained by the positional information obtainment unit.

The ship may navigate a first sea area where a regulation value of a concentration of the particle matter contained in the exhaust gas discharged from the reaction tower is a first concentration and a second sea area where the regulation value of the concentration is a second concentration lower than the first concentration. The heating unit may control the heating of at least one of the first storage unit and the second storage unit before the ship navigates the second sea area.

The ship may navigate a first sea area where a regulation value of a concentration of the particle matter contained in the exhaust gas discharged from the reaction tower is a first concentration and a second sea area where the regulation value of the concentration is a second concentration lower than the first concentration.

While the ship is navigating the second sea area, the heating unit may control the heating of at least one of the first storage unit and the second storage unit based on distance between the second sea area and the first sea area.

The exhaust gas treatment apparatus for ships may further include: a power unit configured to discharge the exhaust gas, an output control unit configured to control output of the power unit, and a remaining capacity obtainment unit configured to obtain at least one of a remaining capacity of the first storage unit and a remaining capacity of the second storage unit.

The output control unit may control the output of the power unit based on at least one of the remaining capacity of the first storage unit and the remaining capacity of the second storage unit obtained by the remaining capacity obtainment unit.

The exhaust gas treatment apparatus for ships may further include a remaining capacity obtainment unit configured to obtain at least one of a remaining capacity of the first storage unit and a remaining capacity of the second storage unit.

The heating unit may control the heating of at least one of the first storage unit and the second storage unit based on at least one of the remaining capacity of the first storage unit and the remaining capacity of the second storage unit obtained by the remaining capacity obtainment unit.

The exhaust gas treatment apparatus for ships may further include: a power unit configured to discharge the exhaust gas; and an output control unit configured to control output of the power unit.

The output control unit may control the output of the power unit based on at least one of the remaining capacity of the first storage unit and the remaining capacity of the second storage unit obtained by the remaining capacity obtainment unit.

The output control unit may control the output of the power unit based on at least one of the current position of the ship obtained by the positional information obtainment unit, distance between any of one or more ports where the ship is anchored and the current position, and at least one of the remaining capacity of the first storage unit and the remaining capacity of the second storage unit obtained by the remaining capacity obtainment unit.

The exhaust gas treatment apparatus for ships may further include a resupply unit configured to resupply the liquid.

The storage unit may control, based on a concentration of sulfur oxide ions contained in the exhausted liquid, an amount of the exhausted liquid stored in the storage unit per unit time and an amount of the liquid resupplied from the resupply unit to the discharged material per unit time.

The heating unit may heat the first storage unit and the third storage unit respectively for a first period and a third period.

The third period may be longer than the first period.

The heating unit may start heating the separation unit, before the switching control unit makes a switch such that the exhausted liquid is supplied to the reaction tower.

The heating unit may control heating of at least one of the first storage unit, the second storage unit, and the separation unit based on the current position of the ship obtained by the positional information obtainment unit.

The heating unit may approximate, based on distance between the current position and a port where the ship is anchored, a total amount of the discharged material discharged from the reaction tower. The heating unit may control, based on the approximated total amount of the discharged material, at least one of the third temperature and the third period at and for which the separation unit is heated.

When the ship is navigating the first sea area, the heating unit may approximate a total amount of the discharged material based on distance between the current position of the ship and the second sea area. The heating unit may control the heating of at least one of the first storage unit and the second storage unit based on the approximated total amount of the discharged material.

When the ship is navigating the second sea area, the heating unit may approximate a total amount of the discharged material based on distance between the current position of the ship and the first sea area/

The heating unit may control the heating of at least one of the first storage unit and the second storage unit based on the approximated total amount of the discharged material.

The summary clause does not necessarily describe all necessary features of the embodiments of the present invention.

The present invention may also be a sub-combination of the features described above.

### BRIEF DESCRIPTION OF THE DRAWINGS

Fig. 1 illustrates one example of an exhaust gas treatment apparatus for ships 100 according to one embodiment of the present invention.
Fig. 2 illustrates one example of a block diagram of the exhaust gas treatment apparatus for ships 100 according to one embodiment of the present invention.
Fig. 3 illustrates relationship between an water content rate R of discharged material 47 and a total capacity WM of the discharged material 47.
Fig. 4 illustrates another example of the block diagram of the exhaust gas treatment apparatus for ships 100 according to one embodiment of the present invention.
Fig. 5 illustrates one example of details of a first storage unit 82 in the exhaust gas treatment apparatus for ships 100 illustrated in Fig. 2.
Fig. 6 illustrates another example of the block diagram of the exhaust gas treatment apparatus for ships 100 according to one embodiment of the present invention.
Fig. 7 illustrates another example of the block diagram of the exhaust gas treatment apparatus for ships 100 according to one embodiment of the present invention.
Fig. 8 illustrates another example of the block diagram of the exhaust gas treatment apparatus for ships 100 according to one embodiment of the present invention.
Fig. 9 illustrates another example of the block diagram of the exhaust gas treatment apparatus for ships 100 according to one embodiment of the present invention.
Fig. 10 illustrates another example of the first storage unit 82 in the exhaust gas treatment apparatus for ships 100 illustrated in Fig. 9.
Fig. 11 illustrates another example of the first storage unit 82 in the exhaust gas treatment apparatus for ships 100 illustrated in Fig. 9.
Fig. 12 illustrates another example of the first storage unit 82 in the exhaust gas treatment apparatus for ships 100 illustrated in Fig. 9.
Fig. 13 illustrates one example of an water route of a ship 200.
Fig. 14 illustrates another example of the water route of the ship 200.
Fig. 15 illustrates another example of the water route of the ship 200.
Fig. 16 illustrates another example of the block diagram of the exhaust gas treatment apparatus for ships 100 according to one embodiment of the present invention.
Fig. 17 illustrates another example of the water route of the ship 200.
Fig. 18 illustrates another example of the water route of the ship 200.
Fig. 19 illustrates another example of the water route of the ship 200.
Fig. 20 illustrates another example of the block diagram of the exhaust gas treatment apparatus for ships 100 according to one embodiment of the present invention.

### DESCRIPTION OF EXEMPLARY EMBODIMENTS

Hereinafter, the present invention will be described through embodiments of the invention, but the following embodiments do not limit the claimed invention. Moreover, not all combinations of features described in the embodiments are necessary to solutions of the invention.

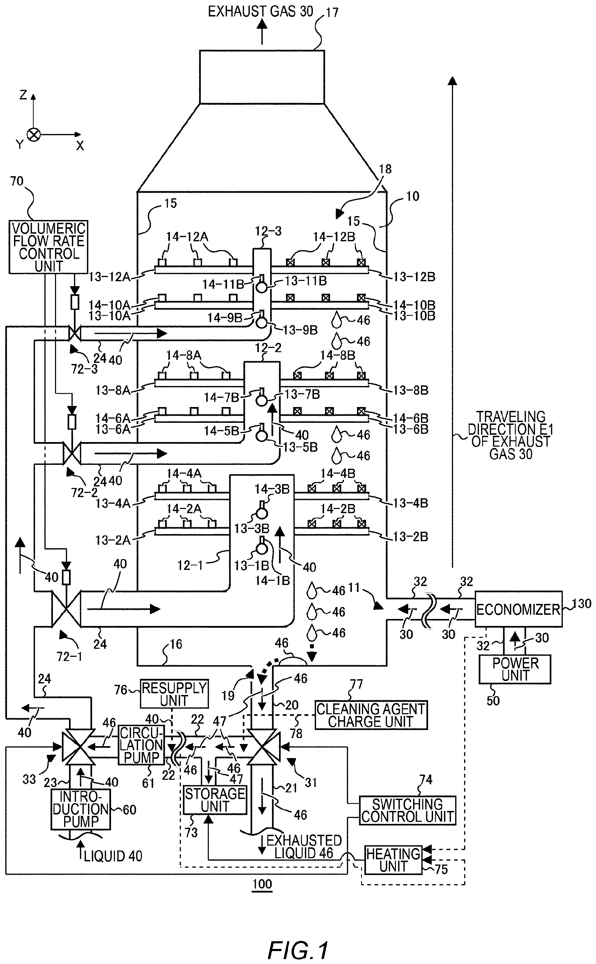

Fig. 1 illustrates one example of an exhaust gas treatment apparatus for ships 100 according to one embodiment of the present invention. The exhaust gas treatment apparatus for ships 100 includes a reaction tower 10 and a heating unit 75. The exhaust gas treatment apparatus for ships 100 may include an exhaust gas introduction tube 32 and a power unit 50.

The power unit 50 is, for example, an engine, a boiler, or the like. The power unit 50 is configured to discharge exhaust gas 30. The exhaust gas introduction tube 32 is configured to connect the power unit 50 and the reaction tower 10. The exhaust gas 30 is introduced into the reaction tower 10. In this example, the exhaust gas 30 discharged from the power unit 50 passes through the exhaust gas introduction tube 32, and then is introduced into the reaction tower 10.

The exhaust gas 30 contains substances such as nitrogen oxide (NOₓ), sulfur oxide (SOₓ), and particle matter (PM). The particle matter (PM) is also referred to as black carbon (BC). The particle matter (PM) is generated due to incomplete combustion of fossil fuel. The particle matter (PM) is a fine particle composed mainly of carbon. The particle matter (PM) is, for example, soot.

The reaction tower 10 may have an exhaust gas introduction port 11 for introducing the exhaust gas 30 and an exhaust gas discharge port 17 for discharging the exhaust gas 30. Liquid 40 for treating the exhaust gas 30 is supplied to the reaction tower 10. The liquid 40 supplied to the reaction tower 10 treats, inside the reaction tower 10, the exhaust gas 30. The liquid 40 is, for example, sea water or alkaline liquid. Treating the exhaust gas 30 refers to removing harmful substances contained in the exhaust gas 30. The liquid 40 becomes exhausted liquid 46 after treating the exhaust gas 30. The reaction tower 10 is configured to discharge the exhausted liquid 46.

The reaction tower 10 in this example has a side wall 15, a bottom surface 16, a gas treatment unit 18, and a liquid discharge port 19. The reaction tower 10 in this example is cylindrical. In this example, the exhaust gas discharge port 17 is arranged at a position facing the bottom surface 16 in a direction parallel to a central axis of the cylindrical reaction tower 10. In this example, the side wall 15 and the bottom surface 16 are respectively an internal surface and a bottom surface of the cylindrical reaction tower 10. The exhaust gas introduction port 11 may be provided on the side wall 15. In this example, the exhaust gas 30 passes through the exhaust gas introduction port 11 from the exhaust gas introduction tube 32, and then is introduced into the gas treatment unit 18.

The side wall 15 and the bottom surface 16 are formed of material resistant to the exhaust gas 30 as well as the liquid 40 and the exhausted liquid 46. Said material may be a combination of an iron material such as SS400 or S-TEN (registered trademark) and at least one of a coating agent and a surface coating material, copper alloy such as naval brass, aluminum alloy such as aluminum brass, nickel alloy such as cupro-nickel, HASTELLOY (registered trademark), or stainless steel such as SUS316L, SUS329J4L, or SUS312.

In this specification, a technical matter may be described by using orthogonal coordinate axes of an X-axis, a Y-axis, and a Z-axis. In this specification, a plane parallel to the bottom surface 16 of the reaction tower 10 is defined as an XY-plane, and a direction from the bottom surface 16 toward the exhaust gas discharge port 17 (a direction perpendicular to the bottom surface 16) is defined as the Z-axis. In this specification, a predetermined direction in the XY-plane is defined as an X-axis direction, and a direction that is orthogonal to the X-axis in the XY-plane is defined as a Y-axis direction.

A Z-axis direction may be parallel to a vertical direction. When the Z-axis direction is parallel to the vertical direction, the XY-plane may be a horizontal plane. The Z-axis direction may also be parallel to a horizontal direction. When the Z-axis direction is parallel to the horizontal direction, the XY-plane may be parallel to the vertical direction.

The exhaust gas treatment apparatus for ships 100 is, for example, a cyclonic scrubber for ships. In the cyclonic scrubber, the exhaust gas 30 introduced into the reaction tower 10 travels in a direction from the exhaust gas introduction port 11 to the exhaust gas discharge port 17 (the Z-axis direction, in this example) while swirling inside the reaction tower 10. In this example, the exhaust gas 30 swirls in the XY-plane when seen in a direction from the exhaust gas discharge port 17 to the bottom surface 16.

The traveling direction of the exhaust gas 30 from the exhaust gas introduction port 11 to the exhaust gas discharge port 17 inside the reaction tower 10 is defined as a traveling direction E1. The fact that the exhaust gas 30 travels in the traveling direction E1 means that the exhaust gas 30 travels in the direction from the exhaust gas introduction port 11 to the exhaust gas discharge port 17. In this example, the traveling direction E1 of the exhaust gas 30 is parallel to the Z-axis. In Fig. 1, the traveling direction E1 of the exhaust gas 30 is indicated by a solid arrow.

The reaction tower 10 may have one or more trunk tubes 12 to which the liquid 40 is supplied and one or more branch tubes 13. The reaction tower 10 may have one or more ejection units 14 for ejecting the liquid 40. In this example, the ejection units 14 are connected to the branch tubes 13, and the branch tubes 13 are connected to the trunk tubes 12.

The reaction tower 10 in this example has three trunk tubes 12 (a trunk tube 12-1, a trunk tube 12-2, and a trunk tube 12-3). In this example, the trunk tube 12-1 and the trunk tube 12-3 are the trunk tubes 12 respectively provided, in a direction parallel to the Z-axis, closest to the exhaust gas introduction port 11 side and closest to the exhaust gas discharge port 17 side. In this example, the trunk tube 12-2 is a trunk tube 12 provided between the trunk tube 12-1 and the trunk tube 12-3 in the Z-axis direction.

The reaction tower 10 in this example includes branch tubes 13-1 to branch tubes 13-12. In this example, the branch tubes 13-1 and the branch tubes 13-12 are the branch tubes 13 respectively provided, in the direction parallel to the Z-axis, closest to the exhaust gas introduction port 11 side and closest to the exhaust gas discharge port 17 side. In this example, the branch tubes 13-1, the branch tubes 13-3, the branch tubes 13-5, the branch tubes 13-7, the branch tubes 13-9, and the branch tubes 13-11 extend in the Y-axis direction, and the branch tubes 13-2, the branch tubes 13-4, the branch tubes 13-6, the branch tubes 13-8, the branch tubes 13-10, and the branch tubes 13-12 extend in the X-axis direction.

In this example, the branch tubes 13-1 to the branch tubes 13-4 are connected to the trunk tube 12-1, the branch tubes 13-5 to the branch tubes 13-8 are connected to the trunk tube 12-2, and the branch tubes 13-9 to the branch tubes 13-12 are connected to the trunk tube 12-3. The branch tubes 13-1, the branch tubes 13-3, the branch tubes 13-5, the branch tubes 13-7, the branch tubes 13-9, and the branch tubes 13-11 may be arranged on both sides of the trunk tube 12 in a direction parallel to the Y-axis. The branch tubes 13-2, the branch tubes 13-4, the branch tubes 13-6, the branch tubes 13-8, the branch tubes 13-10, and the branch tubes 13-12 may be arranged on both sides of the trunk tube 12 in a direction parallel to the X-axis.

Taking the branch tubes 13-1 for example, the branch tube 13-1A and the branch tube 13-1B are the branch tubes 13-1 respectively arranged, in the direction parallel to the Y-axis, on one side and the other side of the trunk tube 12-1. In the direction parallel to the Y-axis, the branch tube 13-1A and the branch tube 13-1B may be provided to sandwich the trunk tube 12-1. Note that, in Fig. 1, the branch tube 13-1A and the branch tube 13-3A are not illustrated because they are arranged at positions overlapping with the trunk tube 12-1.

Taking the branch tubes 13-2 for example, the branch tube 13-2A and the branch tube 13-2B are the branch tubes 13-2 respectively arranged, in the direction parallel to the X-axis, on one side and the other side of the trunk tube 12-1. In the direction parallel to the X-axis, the branch tube 13-2A and the branch tube 13-2B may be provided to sandwich the trunk tube 12-1.

The reaction tower 10 in this example includes ejection units 14-1 to ejection units 14-12. In this example, the ejection units 14-1 and the ejection units 14-12 are the ejection units 14 respectively provided, in the direction parallel to the Z-axis, closest to the exhaust gas introduction port 11 side and closest to the exhaust gas discharge port 17 side. The ejection units 14-1 to the ejection units 14-12 in this example are respectively connected to the branch tubes 13-1 to the branch tubes 13-12. In one branch tube 13 extending in the Y-axis direction, a plurality of ejection units 14 may be provided on one side of the trunk tube 12 in the direction parallel to the Y-axis, and a plurality of ejection units 14 may be provided on the other side thereof. In one branch tube 13 extending in the X-axis direction, a plurality of ejection units 14 may be provided on one side of the trunk tube 12 in the direction parallel to the X-axis, and a plurality of ejection units 14 may be provided on the other side thereof. Note that, in Fig. 1, the ejection units 14-1A, the ejection units 14-3A, the ejection units 14-5A, the ejection units 14-7A, the ejection units 14-9A, and the ejection units 14-11A are not illustrated because they are arranged at positions overlapping with the trunk tubes 12.

The ejection units 14 have opening surfaces for ejecting the liquid 40. In Fig. 1, said opening surfaces are indicated by "x" marks. In one branch tube 13, the respective opening surfaces of the ejection units 14 arranged on one side and the other side of the trunk tube 12 may face one direction and the other direction forming a predetermined angle with an extending direction of the branch tube 13. Taking the ejection units 14-2 for example, in this example, the opening surfaces of the ejection units 14-2A arranged on one side of the trunk tube 12-1 face one direction forming a predetermined angle with the branch tube 13-2A, and the opening surfaces of the ejection units 14-2B arranged on the other side of the trunk tube 12-1 face one direction forming a predetermined angle with the branch tube 13-2B.

The exhaust gas treatment apparatus for ships 100 may include a volumeric flow rate control unit 70. The volumeric flow rate control unit 70 is configured to control a volumeric flow rate of the liquid 40 supplied to the reaction tower 10. The volumeric flow rate control unit 70 may have a valve 72. In this example, the volumeric flow rate control unit 70 is configured to control a volumeric flow rate of the liquid 40 supplied to the ejection units 14 by the valve 72. The volumeric flow rate control unit 70 in this example includes three valves 72 (a valve 72-1, a valve 72-2, and a valve 72-3). The volumeric flow rate control unit 70 in this example is configured to control volumeric flow rates of the liquid 40 supplied to the trunk tube 12-1, the trunk tube 12-2, and the trunk tube 12-3, respectively by the valve 72-1, the valve 72-2, and the valve 72-3. The liquid 40 supplied to the trunk tubes 12 passes through the branch tubes 13, and then is ejected from the ejection units 14 into the reaction tower 10 (to the gas treatment unit 18).

The volumeric flow rate control unit 70 may control a volumeric flow rate of the liquid 40 such that a volumeric flow rate of the liquid 40 supplied to the trunk tube 12-1 is greater than a volumeric flow rate of the liquid 40 supplied to the trunk tube 12-2. The volumeric flow rate control unit 70 may control the volumeric flow rate of the liquid 40 such that the volumeric flow rate of the liquid 40 supplied to the trunk tube 12-2 is greater than a volumeric flow rate of the liquid 40 supplied to the trunk tube 12-3. Ratio of the volumeric flow rate of the liquid 40 supplied to the trunk tube 12-3, the volumeric flow rate of the liquid 40 supplied to the trunk tube 12-2, and the volumeric flow rate of the liquid 40 supplied to the trunk tube 12-1 is, for example, 1: 2: 9.

The exhaust gas treatment apparatus for ships 100 may include a discharge tube 20, a discharge tube 21, a circulation tube 22, an introduction tube 23, and an introduction tube 24. The exhaust gas treatment apparatus for ships 100 may include a switching unit 31 and a switching unit 33. The switching unit 31 and the switching unit 33 are, for example, three-way valves. The exhaust gas treatment apparatus for ships 100 may include an introduction pump 60 and a circulation pump 61.

The discharge tube 20 is connected to the reaction tower 10 and the switching unit 31. In this example, one end of the discharge tube 20 is connected to the bottom surface 16 of the reaction tower 10, and the other end of the discharge tube 20 is connected to the switching unit 31. The discharge tube 21 is connected to the switching unit 31. The circulation tube 22 is connected to the switching unit 31 and the switching unit 33. The introduction tube 23 is connected to the switching unit 33. The introduction tube 24 is connected to the switching unit 33 and the reaction tower 10. In this example, one end of the introduction tube 24 is connected to the switching unit 33, and the other end of the introduction tube 24 is connected to the reaction tower 10 via the valves 72.

In this example, the exhausted liquid 46 passes through the liquid discharge port 19, and then is discharged to the discharge tube 20. The exhausted liquid 46 flowing through the discharge tube 20 is introduced into at least one of the discharge tube 21 and the circulation tube 22 by the switching unit 31. The exhausted liquid 46 introduced into the discharge tube 21 is discharged out of the exhaust gas treatment apparatus for ships 100.

Fluid containing the exhausted liquid 46 discharged from the reaction tower 10 and at least particle matter (PM) is defined as discharged material 47. The discharged material 47 in this example contains said exhausted liquid 46 as well as particle matter (PM) contained in the exhaust gas 30 discharged from the power unit 50. The discharged material 47 in this example further contains oil and contaminants. The discharged material 47 may contain said exhausted liquid 46 as well as particle matter (PM) discharged from something other than the power unit 50.

The circulation pump 61 may be provided to the circulation tube 22. In this example, the discharged material 47 flows inside the circulation tube 22 in a direction from the switching unit 31 to the switching unit 33 by the circulation pump 61. The introduction pump 60 may be provided to the introduction tube 23. The liquid 40 introduced into the introduction tube 23 is introduced into the switching unit 33.

The liquid 40 flowing through the introduction tube 23 and the liquid 40 flowing through at least one of the circulation tube 22 is introduced into the introduction tube 24 by the switching unit 33. The liquid 40 introduced into the introduction tube 24 is introduced into the reaction tower 10.

The exhaust gas treatment apparatus for ships 100 may include a switching control unit 74. The switching control unit 74 is configured to make a switch between supply and non-supply of the exhausted liquid 46 to the reaction tower 10. In this example, the switching control unit 74 is configured to control, by controlling the switching unit 31, whether the exhausted liquid 46 flowing in the discharge tube 20 should flow in the discharge tube 21 or it should flow in the circulation tube 22. In this example, the switching control unit 74 is configured to control, by controlling the switching unit 33, whether the liquid 40 flowing in the circulation tube 22 should flow in the introduction tube 24 or the liquid 40 flowing in the introduction tube 23 should flow in the introduction tube 24.

The switching control unit 74 may control the switching unit 31 such that the exhausted liquid 46 flowing in the discharge tube 20 flows in the circulation tube 22 and control the switching unit 33 such that at least one of the liquid 40 and the exhausted liquid 46 flowing in the circulation tube 22 flows in the introduction tube 24. When the switching control unit 74 controls the switching unit 31 and the switching unit 33 in this way, the liquid 40 and the exhausted liquid 46 circulate in the introduction tube 24, the reaction tower 10, the discharge tube 20, and the circulation tube 22. In this specification, a case is referred to as a closed mode where the liquid 40 and the exhausted liquid 46 circulate in this way. The closed mode is also referred to as a closed-loop system.

The switching control unit 74 may control the switching unit 31 such that the exhausted liquid 46 flowing in the discharge tube 20 flows in the discharge tube 21 and control the switching unit 33 such that the liquid 40 flowing in the introduction tube 23 flows in the introduction tube 24. When the switching control unit 74 controls the switching unit 31 and the switching unit 33 in this way, the liquid 40 is introduced from the outside of the exhaust gas treatment apparatus for ships 100 (from the sea, for example), and the exhausted liquid 46 is discharged out of the exhaust gas treatment apparatus for ships 100 (to the sea, for example). In this specification, a case is referred to as an open mode where the liquid 40 is introduced from the outside of the exhaust gas treatment apparatus for ships 100 and the exhausted liquid 46 is discharged out of the exhaust gas treatment apparatus for ships 100. The open mode is also referred to as an open-loop system.

The switching control unit 74 in this example is configured to control a switch between the above-mentioned closed mode and open mode. For the closed mode, the liquid 40 and the exhausted liquid 46 may circulate by pressure from the circulation pump 61. For the open mode, the liquid 40 may be introduced into the reaction tower 10 by pressure from the introduction pump 60. The exhaust gas treatment apparatus for ships 100 used through a switch between the closed mode and the open mode is also referred to as that of a hybrid system.

The switching control unit 74 may control the switching unit 31 and the switching unit 33 to be in an intermediate state between the above-mentioned closed mode and open mode. The intermediate state between the closed mode and the open mode refers to a state in which a part of the exhausted liquid 46 flowing in the discharge tube 20 flows in the circulation tube 22 and said part of the exhausted liquid 46 flowing in the circulation tube 22 and the liquid 40 flowing in the introduction tube 23 flow in the introduction tube 24. In said intermediate state, another part of the exhausted liquid 46 flowing in the discharge tube 20 may flow in the discharge tube 21. When the switching unit 31 and the switching unit 33 are three-way valves, the switching control unit 74 may control, by adjusting opening of the three-way valves, the flows of the liquid 40 and the exhausted liquid 46 to be in the intermediate state between the above-mentioned closed mode and open mode.

The exhaust gas treatment apparatus for ships 100 may include a cleaning agent charge unit 77. The exhaust gas 30 contains harmful substances such as sulfur oxide (SOₓ). Sulfur oxide (SOₓ) is, for example, sulfurous acid gas (SO₂). The cleaning agent charge unit 77 is configured to charge, into at least one of the exhausted liquid 46 and the liquid 40, a cleaning agent 78 for removing at least part of said harmful substances from the exhaust gas 30.

The cleaning agent 78 may be at least any of a magnesium compound, a sodium compound, and a calcium compound. The cleaning agent 78 may be at least any of magnesium hydroxide (Mg(OH)₂), magnesium oxide (MgO), sodium hydroxide (NaOH), sodium hydrogen carbonate (Na₂CO₃), and calcium carbonate (CaCO₃).

The cleaning agent charge unit 77 may charge the cleaning agent 78 into the exhausted liquid 46. When the switching unit 31 and the switching unit 33 are controlled in the closed mode, the cleaning agent charge unit 77 may charge the cleaning agent 78 into the exhausted liquid 46 flowing through the circulation tube 22. When the switching unit 31 and the switching unit 33 are controlled in the open mode, the cleaning agent charge unit 77 may charge the cleaning agent 78 into the liquid 40 flowing through the introduction tube 24.

When the cleaning agent 78 is charged into the exhausted liquid 46 and the cleaning agent 78 is sodium hydroxide (NaOH), the exhausted liquid 46 becomes a sodium hydroxide (NaOH) solution. Said exhausted liquid 46 is introduced into the introduction tube 24 by the circulation pump 61, and then is ejected from the ejection units 14 into the reaction tower 10 (to the gas treatment unit 18). Reaction between said exhausted liquid 46 and the sulfurous acid gas (SO₂) in the gas treatment unit 18 is expressed by Chemical Formula 1 and Chemical Formula 2 described below.

Chemical Formula 1 SO₂+H₂O→HSO₃⁻+H⁺

Chemical Formula 2 HSO₃⁻+H⁺+2NaOH→Na₂SO₄+H₂O

As expressed by Chemical Formula 1, sulfurous acid gas (SO₂) becomes bisulfite ions (HSO₃⁻) by chemical reaction. The exhausted liquid 46 becomes a solution containing bisulfite ions (HSO₃⁻) by this chemical reaction. The exhausted liquid 46 may be discharged from the inside of the reaction tower 10 to the discharge tube 20. When the switching unit 31 and the switching unit 33 are controlled in the closed mode, the exhausted liquid 46 is introduced into the introduction tube 24, and then is again ejected from the ejection units 14 into the reaction tower 10. At least part of bisulfite ions (HSO₃⁻) contained in the bisulfite ion (HSO₃⁻) solution become sodium sulfate (Na₂SO₄) and water (H₂O) by the chemical reaction expressed by Chemical Formula 2. A sodium sulfate (Na₂SO₄) solution contains sulfate ions (SO₄²⁻).

In this specification, at least one of bisulfite ions (HSO₃⁻) and sulfate ions (SO₄²⁻) is referred to as sulfur oxide ions. When the switching unit 31 and the switching unit 33 are controlled in the closed mode, the chemical reactions expressed by the above-mentioned Chemical Formula 1 and Chemical Formula 2 are repeated in the exhausted liquid 46. Therefore, a concentration of sulfur oxide ions contained in the exhausted liquid 46 is easily increased in accordance with the number of times the exhausted liquid 46 circulates. When the concentration of sulfur oxide ions contained in the exhausted liquid 46 is increased, it becomes difficult for said exhausted liquid 46 to remove the harmful substances contained in the exhaust gas 30.

The exhaust gas treatment apparatus for ships 100 may include a storage unit 73 and a resupply unit 76. In this example, the storage unit 73 is connected to the circulation tube 22. The resupply unit 76 may resupply the liquid 40 to the discharged material 47. When the switching unit 31 and the switching unit 33 are controlled in the closed mode, the storage unit 73 is configured to store a part of the circulating exhausted liquid 46. Said part of the exhausted liquid 46 is, for example, drawn water referred to as so-called bleed-off water. The resupply unit 76 may resupply, to the discharged material 47, the same amount of liquid 40 as an amount of said part of the exhausted liquid 46. This facilitates suppression of the increase in the concentration of sulfur oxide ions contained in the exhausted liquid 46.

The storage unit 73 may control, based on the concentration of sulfur oxide ions contained in the exhausted liquid 46, an amount of the exhausted liquid 46 stored in the storage unit 73 per unit time and an amount of the liquid 40 resupplied from the resupply unit 76 to the discharged material 47 per unit time. The circulation tube 22 may be provided with a sensor for detecting the concentration of sulfur oxide ions contained in the exhausted liquid 46. The storage unit 73 may control, based on the concentration of sulfur oxide ions detected by said sensor, the amount of the exhausted liquid 46 stored from the circulation tube 22 into the storage unit 73 per unit time and the amount of the liquid 40 resupplied from the resupply unit 76 to the discharged material 47 per unit time.

In this example, the discharged material 47 flows in the circulation tube 22. The discharged material 47 contains the exhausted liquid 46 and the above-mentioned particle matter (PM). In this example, a part of the particle matter (PM) contained in the discharged material 47 flowing through the circulation tube 22 is introduced into the storage unit 73. The storage unit 73 in this example is configured to store said part of the particle matter (PM) and a part of the exhausted liquid 46. An water content rate of the particle matter (PM) introduced into the storage unit 73 may be 99% or more. Said water content rate may be mass of said exhausted liquid 46 in a sum of mass of said particle matter (PM) and the mass of said exhausted liquid 46.

The heating unit 75 is configured to heat the discharged material 47. In this example, the heating unit 75 is configured to heat the discharged material 47 stored in the storage unit 73. The heating unit 75 is configured to evaporate, by heating the discharged material 47, at least a part of moisture contained in the discharged material 47. The fact that the heating unit 75 is configured to evaporate at least a part of moisture contained in the discharged material 47 means that the water content rate of the particle matter (PM) stored in the storage unit 73 is reduced by 1% or more from the above-mentioned state of 99% or more through the heating by the heating unit 75. The fact that the heating unit 75 is configured to evaporate at least a part of moisture contained in the discharged material 47 means that the evaporated moisture is discharged out of the introduction tube 24, the reaction tower 10, the discharge tube 20, and the circulation tube 22 without returning to the liquid 40 and the exhausted liquid 46 circulating in the introduction tube 24, the reaction tower 10, the discharge tube 20, and the circulation tube 22.

The exhaust gas treatment apparatus for ships 100 may further include an economizer 130. The economizer 130 may be provided to the exhaust gas introduction tube 32. The economizer 130 is configured to cool the exhaust gas 30 discharged from the power unit 50. The economizer 130 is configured to absorb heat of said exhaust gas 30.

The heating unit 75 may heat the discharged material 47 by using the heat of the exhaust gas 30 absorbed by the economizer 130. The heating unit 75 may heat the storage unit 73 by using said heat. In Fig. 1, a case is indicated by a dashed arrow where the heating unit 75 heats the storage unit 73 by using said heat. The heating unit 75 may be the economizer 130. That is, the economizer 130 may heat the discharged material 47 by using the absorbed heat of the exhaust gas 30.

As mentioned above, the discharged material 47 contains the particle matter (PM) and the exhausted liquid 46. Temperature of the particle matter (PM) contained in the exhaust gas 30 is likely to be higher than temperature of the liquid 40 due to the heat of the exhaust gas 30. The exhausted liquid 46 is removing the harmful substances contained in the exhaust gas 30. Therefore, temperature of the exhausted liquid 46 is likely to be higher than the temperature of the liquid 40 by the chemical reaction expressed by the above-mentioned Chemical Formula 1. Therefore, the discharged material 47 is likely to have predetermined heat that is based on heat of said particle matter (PM) and heat of the exhausted liquid 46.

The heating unit 75 may heat the discharged material 47 stored in the storage unit 73 by using heat of the discharged material 47 flowing through the circulation tube 22. Since the discharged material 47 flows through the circulation tube 22, the circulation tube 22 is configured to easily absorb the heat of the discharged material 47. The heating unit 75 may heat, by using said heat absorbed by the circulation tube 22, the discharged material 47 stored in the storage unit 73. The heating unit 75 may heat the storage unit 73 by using said heat absorbed by the circulation tube 22. In Fig. 1, a case is indicated by a dashed arrow where the heating unit 75 heats the storage unit 73 by using said heat absorbed by the circulation tube 22. The heating unit 75 may be the circulation tube 22. That is, the circulation tube 22 may heat, by using the heat absorbed from the discharged material 47, the discharged material 47 stored in the storage unit 73.

A ship mounted with the exhaust gas treatment apparatus for ships 100 may have a boiler such as one for air conditioning. The heating unit 75 may heat the discharged material 47 by using heat of said boiler. The heating unit 75 may be said boiler.

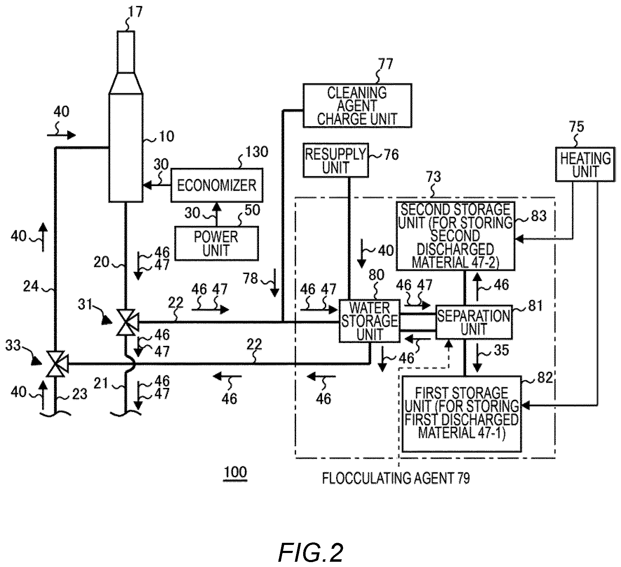

Fig. 2 illustrates one example of a block diagram of the exhaust gas treatment apparatus for ships 100 according to one embodiment of the present invention. Fig. 2 provides details of the storage unit 73 in the exhaust gas treatment apparatus for ships 100 illustrated in Fig. 1. In Fig. 2, the discharge tube 20, the discharge tube 21, the circulation tube 22, the introduction tube 23, and the introduction tube 24 in Fig. 1 are indicated by thick solid lines. In Fig. 2, illustrations of the introduction pump 60, the circulation pump 61, the switching control unit 74, the volumeric flow rate control unit 70, and the valves 72 illustrated in Fig. 1 are omitted.

The exhaust gas treatment apparatus for ships 100 may include an water storage unit 80, a separation unit 81, a first storage unit 82, and a second storage unit 83. The storage unit 73 illustrated in Fig. 1 may include the water storage unit 80, the separation unit 81, the first storage unit 82, and the second storage unit 83.

In this example, the discharged material 47 containing the exhausted liquid 46 and the particle matter (PM) is stored in the water storage unit 80. The water storage unit 80 may be provided to the circulation tube 22. Note that, in this example, the resupply unit 76 is connected to the water storage unit 80. The resupply unit 76 may resupply the liquid 40 to the water storage unit 80.

The particle matter (PM) contained in the exhaust gas 30 is defined as particle matter 35. The discharged material 47 containing the exhausted liquid 46 is introduced into the separation unit 81. The separation unit 81 is configured to separate moisture contained in said exhausted liquid 46 and the particle matter 35. In this example, the discharged material 47 stored in the water storage unit 80 is introduced into the separation unit 81. The water storage unit 80 may introduce, into the separation unit 81, at least a part of the discharged material 47 introduced from the circulation tube 22 into the water storage unit 80. The water storage unit 80 may determine, based on a concentration of the particle matter (PM) contained in the discharged material 47 flowing through the circulation tube 22, an amount of the discharged material 47 introduced from the water storage unit 80 into the separation unit 81 per unit time.

Flocculating agent 79 for flocculating the particle matter 35 may or may not be introduced into the separation unit 81. The flocculating agent 79 will be mentioned later.

In this example, the particle matter 35 separated by the separation unit 81 is introduced into the first storage unit 82. In this example, a part of the exhausted liquid 46 separated by the separation unit 81 is introduced into the second storage unit 83.

The first storage unit 82 is configured to store first discharged material 47-1. The first discharged material 47-1 contains the particle matter 35 removed from the exhausted liquid 46 and a part of the exhausted liquid 46. The second storage unit 83 is configured to store second discharged material 47-2. The second discharged material 47-2 contains the exhausted liquid 46 from which at least a part of the particle matter 35 has been removed.

A content rate of the particle matter 35 contained in the first discharged material 47-1 is greater than a content rate of the particle matter 35 contained in the second discharged material 47-2. A content rate of the exhausted liquid 46 contained in the first discharged material 47-1 is smaller than a content rate of the exhausted liquid 46 contained in the second discharged material 47-2. The first storage unit 82 may be a sludge tank configured to store the particle matter 35 containing the exhausted liquid 46. The second storage unit 83 may be a storage tank configured to store the exhausted liquid 46 containing the particle matter 35. The exhausted liquid 46 stored in the second storage unit 83 may be the above-mentioned so-called bleed-off water.

The heating unit 75 may heat the first storage unit 82. The heating unit 75 may heat the first discharged material 47-1 by heating the first storage unit 82. The heating unit 75 may heat the second storage unit 83. The heating unit 75 may heat the second discharged material 47-2 by heating the second storage unit 83. The heating unit 75 may heat at least one of the first storage unit 82 and the second storage unit 83.

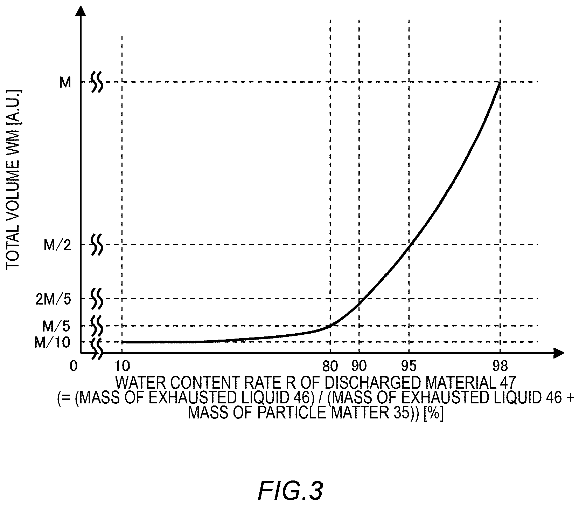

Fig. 3 illustrates relationship between an water content rate R and a total capacity WM of the discharged material 47. The water content rate R of the discharged material 47 may be a percentage of mass of the exhausted liquid 46 to total mass of the discharged material 47 (that is, a sum of the mass of the exhausted liquid 46 and mass of the particle matter 35). That is, said percentage may be wt.%. The total capacity WM of the discharged material 47 is volume of the discharged material 47 having said total mass. Assuming that volume of water contained in the discharged material 47 having the total capacity WM is Vw, the following formula holds: the water content rate R (%) of the discharged material 47 = the volume Vw / the total capacity WM.

The more the water content rate R is decreased, the more easily the total capacity WM of the discharged material 47 is decreased. The total capacity WM for when the water content rate R is 98% is defined as a capacity M. In this example, the total capacities WM are respectively 1/2, 2/5, 1/5, and 1/10 of the capacity M when the water content rate R is 95%, 90%, 80%, and 10%. When the water content rate R is decreased by 3% from 98%, the capacity M becomes 1/2, and when the water content rate R is decreased by 8%, the capacity M becomes 1/5.

Description will be made with reference to Fig. 2 again. In the exhaust gas treatment apparatus for ships 100 in this example, the heating unit 75 is configured to heat the first storage unit 82. Therefore, the exhaust gas treatment apparatus for ships 100 in this example can reduce, as illustrated in Fig. 3, a total capacity M of the first discharged material 47-1 stored in the first storage unit 82. Therefore, the exhaust gas treatment apparatus for ships 100 in this example can downsize the first storage unit 82. Moreover, the exhaust gas treatment apparatus for ships 100 in this example can reduce the total capacity M of the discharged material 47-1, and thus a disposal cost of the first discharged material 47-1 (a lump of soot generated by incomplete combustion of the exhaust gas 30, for example) is easily reduced.

The heating unit 75 is configured to heat the first storage unit 82, so that the moisture contained in the exhausted liquid 46 is evaporated from the first discharged material 47-1. Said evaporated moisture may be discharged out of the exhaust gas treatment apparatus for ships 100.

The heating unit 75 may heat the second storage unit 83. The second discharged material 47-2 (the exhausted liquid 46 from which at least a part of the particle matter 35 has been removed) is stored in the second storage unit 83. Therefore, the heating unit 75 is configured to heat the second storage unit 83, so that a part of the moisture contained in said exhausted liquid 46 is easily evaporated. Therefore, the exhaust gas treatment apparatus for ships 100 in this example can decrease a total capacity of the second discharged material 47-2. Therefore, the exhaust gas treatment apparatus for ships 100 in this example can downsize the second storage unit (a pool configured to store the exhausted liquid 46, for example).

When the moisture contained in the exhausted liquid 46 is evaporated, a total capacity of the discharged material 47 containing said exhausted liquid 46 is reduced. The total capacity of the discharged material 47 before said moisture is evaporated is defined as W1, and the total capacity of the discharged material 47 after said moisture is evaporated is defined as W2. A reduction rate RD of the total capacity of the discharged material 47 before and after the evaporation of the moisture contained in the exhausted liquid 46 is defined by (the total capacity W1) / (the total capacity W2).

When moisture in a unit quality product contained in the exhausted liquid 46 is evaporated, a reduction rate of a total capacity WM of the first discharged material 47-1 is defined as RD1, and a reduction rate of the total capacity of the second discharged material 47-2 is defined as RD2. As illustrated in Fig. 3, the higher the water content rate R is, the greater a decrease rate of the water content rate R (a slope of a curve in Fig. 3) tends to be. Therefore, when the water content rate R is equal to or greater than a predetermined value (80%, for example), therefore, the reduction rate RD1 is likely to be greater than the reduction rate RD2.

The heating unit 75 may heat the first storage unit 82 at a first temperature Te1. The heating unit 75 may heat the second storage unit 83 at a second temperature Te2. The first temperature Te1 may be higher than the second temperature Te2. That is, the heating unit 75 may heat the first storage unit 82 at the first temperature Te1 higher than the second temperature Te2. When the reduction rate RD1 of the first discharged material 47-1 is greater than the reduction rate RD2 of the second discharged material 47-2, the first temperature Te1 is higher than the second temperature Te2, so that a sum of a total capacity of the first discharged material 47-1 and the total capacity of the second discharged material 47-2 is more easily reduced by the exhaust gas treatment apparatus for ships 100 than when the first temperature Te1 is equal to or lower than the second temperature Te2. As a result, a sum of a total capacity of the first storage unit 82 and a total capacity of the second storage unit 83 is more easily reduced by the exhaust gas treatment apparatus for ships 100 than when the first temperature Te1 is equal to or lower than the second temperature Te2.

The heating unit 75 may heat the first storage unit 82 for a first period Tp1. The heating unit 75 may heat the second storage unit 83 for a second period Tp2. The first period Tp1 may be longer than the second period Tp2. When the reduction rate RD1 of the first discharged material 47-1 is greater than the reduction rate RD2 of the second discharged material 47-2, the first period Tp1 is longer than the second period Tp2, so that the sum of the total capacity of the first discharged material 47-1 and the total capacity of the second discharged material 47-2 is more easily reduced by the exhaust gas treatment apparatus for ships 100 than when the first period Tp1 is shorter than the second period Tp2. As a result, the sum of the total capacity of the first storage unit 82 and the total capacity of the second storage unit 83 is more easily reduced by the exhaust gas treatment apparatus for ships 100 than when the first period Tp1 is shorter than the second period Tp2.

When the switching unit 31 and the switching unit 33 are controlled in the closed mode, the heating unit 75 may continue heating of at least one of the first storage unit 82 and the second storage unit 83 while the switching unit 31 and the switching unit 33 are controlled in the closed mode. When the switching unit 31 and the switching unit 33 are changed from the closed mode to the open mode, the heating unit 75 may still continue the heating of at least one of the first storage unit 82 and the second storage unit 83 after the switching unit 31 and the switching unit 33 are changed from the closed mode to the open mode.

The flocculating agent 79 for flocculating the particle matter 35 may be introduced into the separation unit 81. The particle matter 35 is flocculated, so that the total capacity WM of the first discharged material 47 is easily reduced. The flocculating agent 79 may be at least one of iron chloride (FeCl₂), iron sulfide (FeS), calcium sulfate (CaSO₄), aluminum sulfate (Al₂(SO₄)₃•16H₂O), polyaluminum chloride (so-called PAC), polymer flocculating agent such as cationic, nonionic, and anionic polymer flocculating agents. The heating unit 75 may heat the first discharged material 47 with the particle matter 35 flocculated by the flocculating agent 79. Note that the flocculating agent 79 does not need to be introduced into the separation unit 81.

The heating unit 75 may start the heating of at least one of the first storage unit 82 and the second storage unit 83 before the switching control unit 74 makes a switch such that the exhausted liquid 46 is supplied to the reaction tower 10. A case where the switching control unit 74 makes a switch such that the exhausted liquid 46 is supplied to the reaction tower 10 is a case where the switching control unit 74 switches the switching unit 31 and the switching unit 33 from the above-mentioned open mode to closed mode.

At a time point where the switching control unit 74 switches the switching unit 31 and the switching unit 33 from the open mode to the closed mode, the discharged material 47 may exist between the water storage unit 80 and the separation unit 81, between the separation unit 81 and the first storage unit 82, and between the separation unit 81 and the second storage unit 83. Taking the first storage unit 82 for example, a part of said discharged material 47 existing between the water storage unit 80 and the separation unit 81 as well as said discharged material 47 existing between the separation unit 81 and the first storage unit 82 are introduced into the first storage unit 82.

A total capacity of the first discharged material 47-1 that can be accommodated by the first storage unit 82 is defined as a capacity C1. At a time point where the discharged material 47 is introduced into the first storage unit 82, when the total capacity WM of the first discharged material 47-1 is close to the capacity C1 of the first storage unit 82, the first storage unit 82 may not have a sufficient capacity (that is, C1-WM) to receive said discharged material 47 newly introduced into the first storage unit 82. Therefore, the heating unit 75 is configured to start the heating of at least one of the first storage unit 82 and the second storage unit 83 before the switching control unit 74 makes the switch such that the exhausted liquid 46 is supplied to the reaction tower 10, so that the total capacity WM of the first discharged material 47-1 is more easily reduced than before said heating is started, at the time point where said discharged material 47 is introduced into the first storage unit 82. This allows the exhaust gas treatment apparatus for ships 100 to easily secure the sufficient capacity (that is, C1-WM) in the first storage unit 82 to receive said discharged material 47 newly introduced into the first storage unit 82.

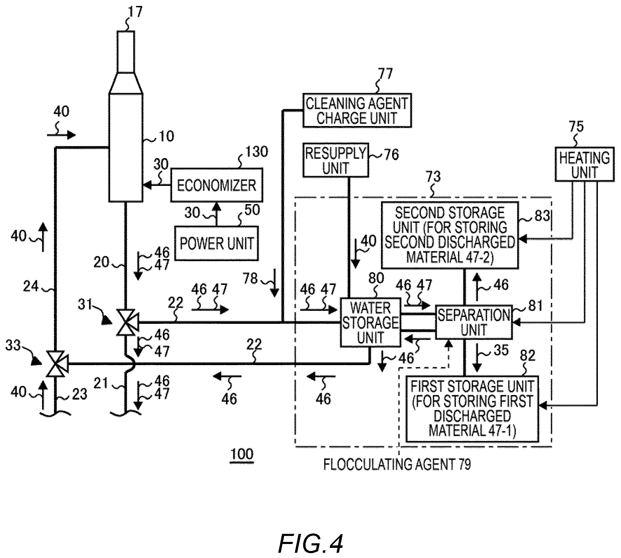

Fig. 4 illustrates another example of the block diagram of the exhaust gas treatment apparatus for ships 100 according to one embodiment of the present invention. In the exhaust gas treatment apparatus for ships 100 in this example, the heating unit 75 is further configured to heat the separation unit 81. In this respect, the exhaust gas treatment apparatus for ships 100 in this example is different from the exhaust gas treatment apparatus for ships 100 illustrated in Fig. 2.

As mentioned above, the discharged material 47 is introduced into the separation unit 81. The discharged material 47 contains the exhausted liquid 46. In the exhaust gas treatment apparatus for ships 100 in this example, the heating unit 75 is configured to heat the separation unit 81, and thus the moisture contained in the exhausted liquid 46 introduced into the separation unit 81 is easily evaporated. When said moisture is evaporated in the separation unit 81, a total capacity WM of the discharged material 47 introduced into the separation unit 81 is reduced as illustrated in Fig. 3. Therefore, the exhaust gas treatment apparatus for ships 100 in this example is configured to easily reduce a total capacity WM of the first discharged material 47-1 stored in the first storage unit 82. Moreover, when the moisture contained in the exhausted liquid 46 is evaporated in the separation unit 81, the amount of the exhausted liquid 46 introduced from the separation unit 81 into the second storage unit 83 is easily reduced. Therefore, the exhaust gas treatment apparatus for ships 100 in this example is configured to easily reduce a total capacity of the second discharged material 47-2 stored in the second storage unit 83.

The heating unit 75 may heat the separation unit 81 and the first storage unit 82. The heating unit 75 is configured to heat the separation unit 81, so that the moisture contained in the exhausted liquid 46 in the separation unit 81 is evaporated. The heating unit 75 is also configured to heat the first storage unit 82, so that the moisture contained in the exhausted liquid 46 in the first storage unit 82 is further evaporated. Therefore, the heating unit 75 is configured to heat the separation unit 81 and the first storage unit 82, so that the total capacity WM of the first discharged material 47-1 is even more easily reduced than when the heating unit 75 heats the separation unit 81 only.

The heating unit 75 may heat the first storage unit 82 at the first temperature Te1. The heating unit 75 may heat the separation unit 81 at a third temperature Te3. The third temperature Te3 may be higher than the first temperature Te1. That is, the heating unit 75 may heat the separation unit 81 at the third temperature Te3 higher than the first temperature Te1. As mentioned above, the higher the water content rate R is, the greater a decrease rate of the water content rate R of the discharged material 47 tends to be (see Fig. 3). The water content rate R of the discharged material 47 in the separation unit 81 is likely to be greater than an water content rate R of the first discharged material 47-1 in the first storage unit 82. Therefore, when the third temperature Te3 is higher than the first temperature Te1, the decrease rate of the water content rate R in the separation unit 81 is likely to be greater than when the third temperature Te3 is equal to or lower than the first temperature Te1. Therefore, the third temperature Te3 is higher than the first temperature Te1, so that the total capacity WM of the first discharged material 47-1 is more easily reduced than when the third temperature Te3 is equal to or lower than the first temperature Te1.

The heating unit 75 may heat the first storage unit 82 for the first period Tp1. The heating unit 75 may heat the separation unit 81 for a third period Tp3. The third period Tp3 may be longer than the first period Tp1. The third period Tp3 is longer than the first period Tp1, so that the total capacity WM of the first discharged material 47-1 is more easily reduced than when the third period Tp3 is shorter than the first period Tp1.

The heating unit 75 may heat the separation unit 81 and the second storage unit 83. The heating unit 75 may heat the separation unit 81 as well as the first storage unit 82 and the second storage unit 83.

The heating unit 75 may start heating the separation unit 81 before the switching control unit 74 makes the switch such that the exhausted liquid 46 is supplied to the reaction tower 10. This facilitates reduction of the total capacity WM of the discharged material 47 separated in the separation unit 81. This allows the exhaust gas treatment apparatus for ships 100 to easily secure the sufficient capacity (that is, C1-WM) in the first storage unit 82 to receive said discharged material 47 newly introduced into the first storage unit 82.

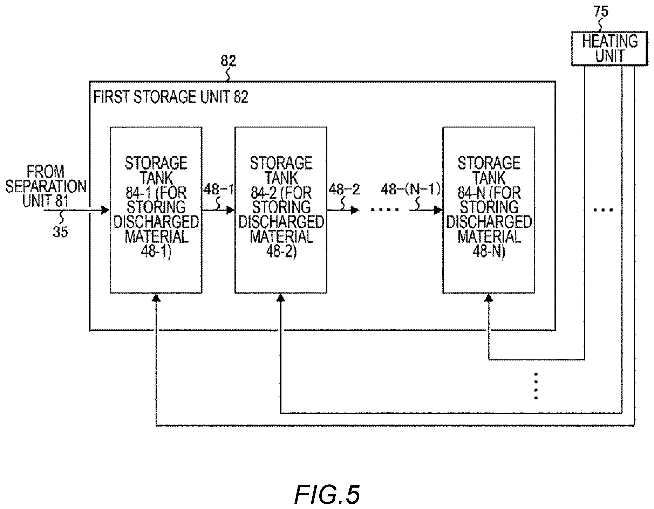

Fig. 5 illustrates one example of details of a first storage unit 82 in the exhaust gas treatment apparatus for ships 100 illustrated in Fig. 2. In this example, the first storage unit 82 has a plurality of storage tanks 84. In this example, the heating unit 75 is configured to heat the plurality of storage tanks 84.

In this example, the particle matter 35 separated by the separation unit 81 is introduced into a storage tank 84-1. The first discharged material 47-1 introduced into the storage tank 84-1 is defined as discharged material 48-1. The storage tank 84-1 is configured to introduce the discharged material 48-1 into a storage tank 84-2. Similarly, a storage tank 84-(N-1) is configured to introduce discharged material 48-(N-1) into a storage tank 84-N, where N is an integer of 2 or more.

The heating unit 75 may control, based on a content of moisture (that is, an water content rate R) contained by the discharged material 48 stored in each of the plurality of storage tanks 84, temperature at which each of the plurality of storage tanks 84 is heated. The water content rate R of the discharged material 48 stored in each of the plurality of storage tanks 84 may be different from one another. Therefore, the heating unit 75 is configured to control, based on the water content rate R of each of the discharged material 48-1 to the discharged material 48-N, the temperature at which each of the storage tank 84-1 to the storage tank 84-N is heated, so that evaporation efficiency of the moisture contained in the discharged material 48 is more easily improved than when the storage tank 84-1 to the storage tank 84-N are heated at the same temperature.

When the first storage unit 82 has the plurality of storage tanks 84, the heating unit 75 may set, for a storage tank 84 that stores the discharged material 48 having a higher water content rate R, temperature at which the storage tank 84 is heated, to be higher. In this example, since the heating unit 75 heats the plurality of storage tanks 84, the water content rate R of the discharged material 48-N is likely to be lower than the water content rate R of the discharged material 48-(N-1). A decrease rate of the water content rate R is represented by a slope of a tangent of the curve (see Fig. 3) at any water content rate R. As illustrated in Fig. 3, the higher the water content rate R is, the greater the decrease rate of the water content rate R tends to be. Therefore, the heating unit 75 may set temperature at which the storage tank 84-(N-1) is heated, to be higher than temperature at which the storage tank 84-N is heated. As a result, the total capacity WM of the first discharged material 47 stored in the first storage unit 82 (that is, a sum of a total capacity of the discharged material 48-1 to a total capacity of the discharged material 48-N) is more easily reduced than when the heating unit 75 heats the storage tank 84-1 to the storage tank 84-N at the same temperature.

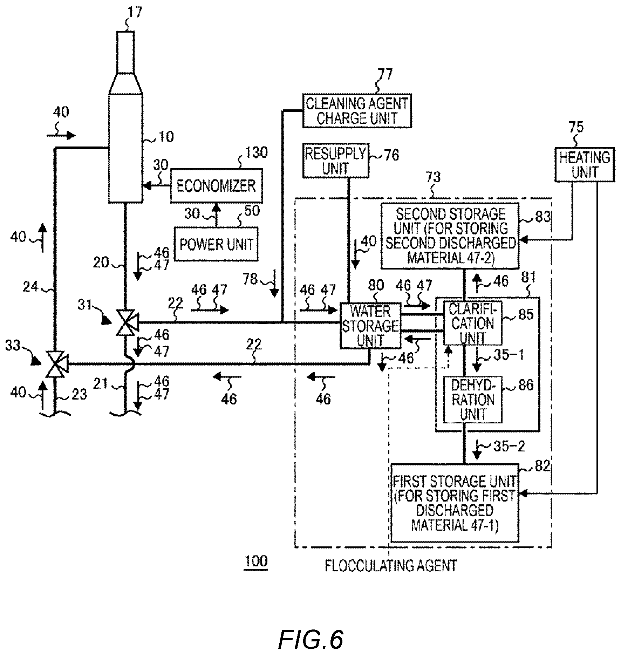

Fig. 6 illustrates another example of the block diagram of the exhaust gas treatment apparatus for ships 100 according to one embodiment of the present invention. In the exhaust gas treatment apparatus for ships 100 in this example, the separation unit 81 has a clarification unit 85 and a dehydration unit 86. In this respect, the exhaust gas treatment apparatus for ships 100 in this example is different from the exhaust gas treatment apparatus for ships 100 illustrated in Fig. 2.

In this example, the discharged material 47 stored in the water storage unit 80 is introduced into the clarification unit 85. The clarification unit 85 in this example is configured to derive the exhausted liquid 46 and particle matter 35-1 by clarifying the discharged material 47. Said exhausted liquid 46 may be introduced into the second storage unit 83. In this example, the clarification unit 85 is configured to introduce the particle matter 35-1 into the dehydration unit 86. The dehydration unit 86 in this example is configured to derive particle matter 35-2 by dehydrating the particle matter 35-1. The particle matter 35-2 may be introduced into the first storage unit 82. Note that, in this example, the flocculating agent 79 may or may not be introduced into the clarification unit 85.

The dehydration unit 86 may be a dehydrator configured to dehydrate moisture by centrifugal force of rotation. The particle matter 35-1 contains the exhausted liquid 46. The dehydration unit 86 may dehydrate a part of the moisture contained in said exhausted liquid 46 by rotating the particle matter 35-1. The dehydration unit 86 is an warmer configured to evaporate moisture by warming, and may be an warmer different from the heating unit 75. The moisture dehydrated by the dehydration unit 86 may be discharged out of the exhaust gas treatment apparatus for ships 100.

In the exhaust gas treatment apparatus for ships 100 in this example, since the separation unit 81 has the dehydration unit 86, the water content rate R of the first discharged material 47-1 introduced into the first storage unit 82 is more easily reduced than when the separation unit 81 does not have the dehydration unit 86. Therefore, in the exhaust gas treatment apparatus for ships 100 in this example, the total capacity WM of the first discharged material 47-1 is likely to be smaller than when the separation unit 81 does not have the dehydration unit 86. Note that the heating unit 75 may heat said first discharged material 47-1.

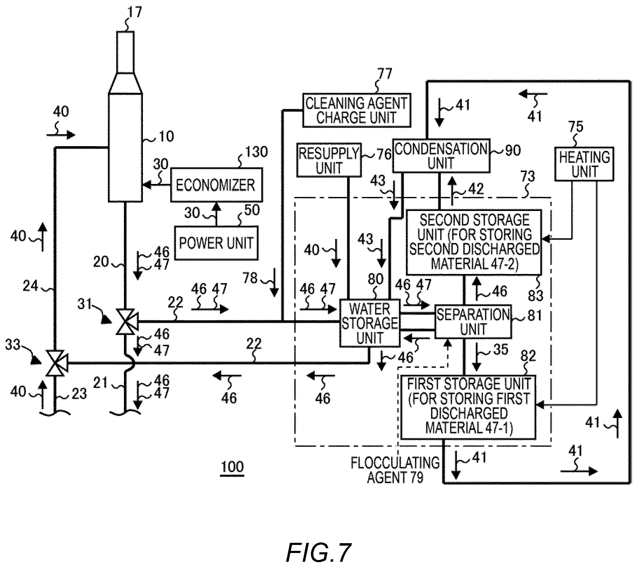

Fig. 7 illustrates another example of the block diagram of the exhaust gas treatment apparatus for ships 100 according to one embodiment of the present invention. The exhaust gas treatment apparatus for ships 100 in this example is different from the exhaust gas treatment apparatus for ships 100 illustrated in Fig. 2 in that the former further includes a condensation unit 90.

As mentioned above, the heating unit 75 is configured to heat at least one of the first storage unit 82 and the second storage unit 83. When the heating unit 75 heats the first storage unit 82, at least a part of the exhausted liquid 46 contained in the first discharged material 47-1 stored in the first storage unit 82 is evaporated through the heating by the heating unit 75. Vapor generated by said heating is defined as first vapor 41. When the heating unit 75 heats the second storage unit 83, at least a part of the exhausted liquid 46 contained in the second discharged material 47-2 stored in the second storage unit 83 is evaporated through the heating by the heating unit 75. Vapor generated by said heating is defined as second vapor 42.

The condensation unit 90 may condense at least one of the first vapor 41 and the second vapor 42. The condensation unit 90 may generate liquid 43 by condensing the first vapor 41. The condensation unit 90 may generate the liquid 43 by condensing the second vapor 42. The condensation unit 90 may introduce the liquid 43 into the water storage unit 80. The liquid 43 may be mixed with the exhausted liquid 46 in the water storage unit 80. When the switching unit 31 and the switching unit 33 are controlled in the closed mode, the liquid 43 mixed with the exhausted liquid 46 may circulate in the circulation tube 22, the introduction tube 24, the reaction tower 10, and the discharge tube 20.

Since the first vapor 41 and the second vapor 42 are generated through the heating by the heating unit 75, the first vapor 41 and the second vapor 42 are less likely to contain sulfur oxide ions. Therefore, the liquid 43 is mixed with the exhausted liquid 46, so that the concentration of sulfur oxide ions contained in the exhausted liquid 46 is easily reduced. Therefore, the exhaust gas treatment apparatus for ships 100 in this example is configured to easily suppress the increase in the concentration of sulfur oxide ions contained in the exhausted liquid 46 even when the switching unit 31 and the switching unit 33 are controlled in the closed mode.

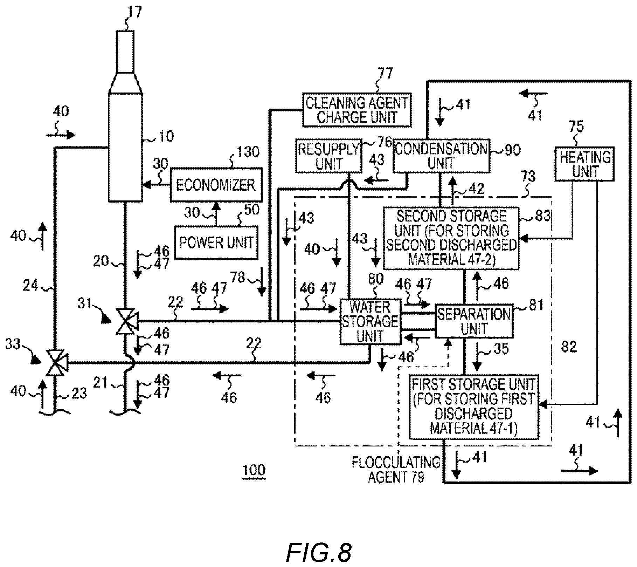

Fig. 8 illustrates another example of the block diagram of the exhaust gas treatment apparatus for ships 100 according to one embodiment of the present invention. The exhaust gas treatment apparatus for ships 100 in this example is different from the exhaust gas treatment apparatus for ships 100 illustrated in Fig. 7 in that the liquid 43 generated by the condensation unit 90 is introduced into the circulation tube 22.

The liquid 43 may be introduced into the circulation tube 22. The liquid 43 may be mixed with the exhausted liquid 46 in the circulation tube 22. The liquid 43 may be introduced into the circulation tube 22, outside the storage unit 73 (a dashed-dotted line in Fig. 7). The liquid 43 may be introduced into the circulation tube 22 connecting the switching unit 31 and the water storage unit 80.

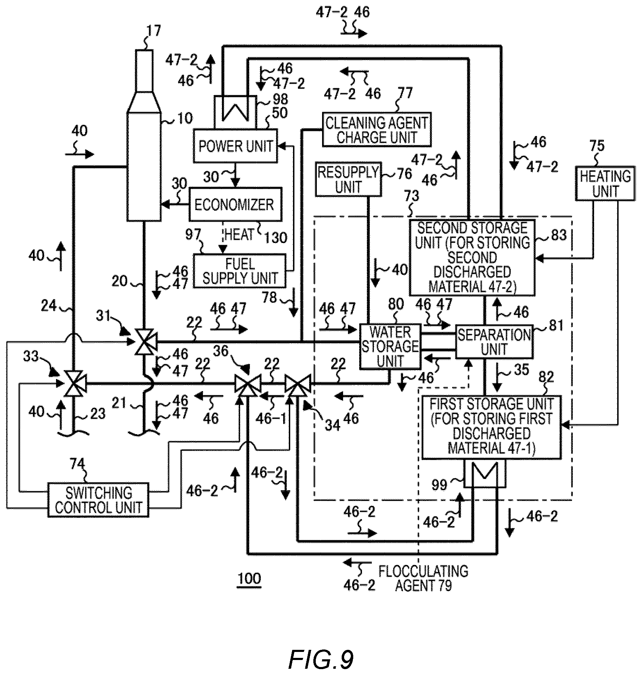

Fig. 9 illustrates another example of the block diagram of the exhaust gas treatment apparatus for ships 100 according to one embodiment of the present invention. The exhaust gas treatment apparatus for ships 100 in this example is different from the exhaust gas treatment apparatus for ships 100 illustrated in Fig. 2 in that the former further includes a first heat exchanger 98 and a second heat exchanger 99 as well as a switching unit 34 and a switching unit 36.

The first heat exchanger 98 is configured to exchange the heat of the exhausted liquid 46 and heat of the power unit 50. The first heat exchanger 98 may cool the power unit 50 by exchanging the heat of the exhausted liquid 46 and the heat of the power unit 50. The exhaust gas treatment apparatus for ships 100 may include the first heat exchanger 98, thereby utilizing the exhausted liquid 46 as cooling water for the power unit 50.

Since the power unit 50 burns fossil fuel, temperature of the power unit 50 is likely to be higher than the temperature of the exhausted liquid 46. Therefore, the first heat exchanger 98 is configured to exchange the heat of the exhausted liquid 46 and the heat of the power unit 50, so that the power unit 50 is easily cooled.

The exhausted liquid 46 contained in the second discharged material 47-2 stored in the second storage unit 83 may be introduced into the first heat exchanger 98. As mentioned above, the first storage unit 82 is configured to store the first discharged material 47-1, and the second storage unit 83 is configured to store the second discharged material 47-2. Since the content rate of the particle matter 35 contained in the second discharged material 47-2 is smaller than the content rate of the particle matter 35 contained in the first discharged material 47-1, viscosity of the second discharged material 47-2 is likely to be smaller than viscosity of the first discharged material 47-1. Therefore, the second discharged material 47-2 is configured to more easily flow through a predetermined closed space than the first discharged material 47-1. The exhausted liquid 46 contained in the second discharged material 47-2 may be constantly introduced into the first heat exchanger 98.

The second heat exchanger 99 is configured to exchange the heat of the exhausted liquid 46 and heat of the first discharged material 47-1. The second heat exchanger 99 may exchange the heat of the exhausted liquid 46 and heat of the first storage unit 82. The second heat exchanger 99 may cool the first discharged material 47-1 by exchanging the heat of the exhausted liquid 46 and the heat of the first discharged material 47-1. The exhaust gas treatment apparatus for ships 100 may include the second heat exchanger 99, thereby utilizing the exhausted liquid 46 as cooling water for the first discharged material 47-1.

When the heating unit 75 heats the first storage unit 82, temperature of the particle matter 35 contained in the first discharged material 47-1 is likely to be higher than temperature of the particle matter 35 contained in the discharged material 47 before the separation by the separation unit 81. Therefore, the second heat exchanger 99 is configured to exchange the heat of the exhausted liquid 46 and the heat of the first discharged material 47-1, so that the first discharged material 47-1 is easily cooled.

The switching unit 34 and the switching unit 36 may be provided to the circulation tube 22. The switching unit 34 and the switching unit 36 are, for example, three-way valves.

The switching control unit 74 may control the switching unit 34 such that at least a part of the exhausted liquid 46 flowing in the circulation tube 22 is introduced into the second heat exchanger 99 and control the switching unit 36 such that the exhausted liquid 46 introduced into the second heat exchanger 99 flows in the circulation tube 22. When the switching unit 34 is a three-way valve, the switching control unit 74 may control, by adjusting the opening of said three-way valve, the switching unit 34 such that a part of the exhausted liquid 46 (exhausted liquid 46-1) flows in the circulation tube 22 and another part of the exhausted liquid 46 (exhausted liquid 46-2) is introduced into the second heat exchanger 99. When the switching unit 36 is a three-way valve, the switching control unit 74 may control, by adjusting the opening of said three-way valve, the switching unit 36 such that the exhausted liquid 46-1 and the exhausted liquid 46-2 are introduced into the switching unit 33. The exhausted liquid 46 flowing in the circulation tube 22 may be constantly introduced into the second heat exchanger 99.

The exhaust gas treatment apparatus for ships 100 may include at least one of the first heat exchanger 98 and the second heat exchanger 99. The exhaust gas treatment apparatus for ships 100 in this example includes both the first heat exchanger 98 and the second heat exchanger 99. When the exhaust gas treatment apparatus for ships 100 does not include the second heat exchanger 99, the exhaust gas treatment apparatus for ships 100 does not need to include the switching unit 34 and the switching unit 36.

The exhaust gas treatment apparatus for ships 100 may include a fuel supply unit 97. The fuel supply unit 97 is configured to supply the power unit 50 with fuel for operating the power unit 50. Said fuel is, for example, fuel oil C. When said fuel is fuel oil C, viscosity of the fuel oil C supplied to the power unit 50 is desirably lower than viscosity of the fuel oil C at room temperature.

Heat of the economizer 130 may be supplied to the fuel supply unit 97. The heat of the economizer 130 is supplied to the fuel supply unit 97, so that the fuel supplied from the fuel supply unit 97 to the power unit 50 may be heated. In the exhaust gas treatment apparatus for ships 100 in this example, since the heat of the economizer 130 is supplied to the fuel supply unit 97, when the fuel supplied from the fuel supply unit 97 to the power unit 50 is fuel oil C, the viscosity of the fuel oil C is easily decreased through heating of the fuel oil C by said heat.

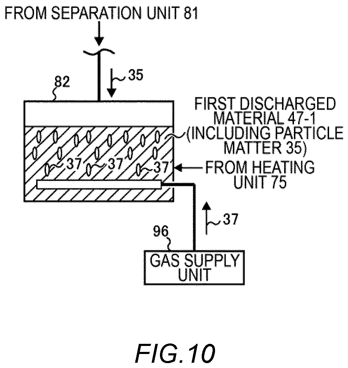

Fig. 10 illustrates another example of the first storage unit 82 in the exhaust gas treatment apparatus for ships 100 illustrated in Fig. 9. The exhaust gas treatment apparatus for ships 100 in this example includes a gas supply unit 96 in place of the second heat exchanger 99 in the example illustrated in Fig. 9. At least one of the first storage unit 82 and the second storage unit 83 may have the gas supply unit 96. In this example, the first storage unit 82 has the gas supply unit 96.

The gas supply unit 96 in this example is configured to supply gas 37 into the first discharged material 47-1. The gas 37 may be the atmosphere. The gas supply unit 96 may supply aeration by the gas 37 into the first discharged material 47-1. The gas supply unit 96 is configured to supply the gas 37 into the first discharged material 47-1, so that the heat of the first discharged material 47-1 and heat of the gas 37 are easily exchanged. The heat of the first discharged material 47-1 and the heat of the gas 37 are exchanged, so that the first discharged material 47-1 is easily cooled.

When the second storage unit 83 has the gas supply unit 96, said gas supply unit 96 is configured to supply the gas 37 into the second discharged material 47-2. Said gas supply unit 96 may supply the aeration by the gas 37 into the second discharged material 47-2. The gas supply unit 96 is configured to supply the gas 37 into the second discharged material 47-2, so that heat of the second discharged material 47-2 and the heat of the gas 37 are easily exchanged. The heat of the second discharged material 47-2 and the heat of the gas 37 are exchanged, so that the second discharged material 47-2 is easily cooled.

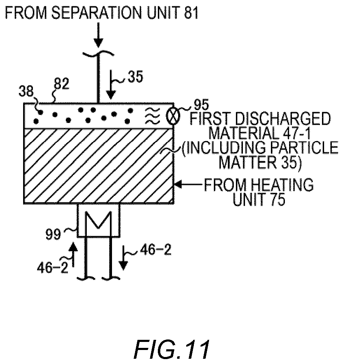

Fig. 11 illustrates another example of the first storage unit 82 in the exhaust gas treatment apparatus for ships 100 illustrated in Fig. 9. The exhaust gas treatment apparatus for ships 100 in this example further includes an air sending unit 95. The air sending unit 95 may be provided to the first storage unit 82. At least one of the first storage unit 82 and the second storage unit 83 may have the air sending unit 95. In this example, the first storage unit 82 has the air sending unit 95.

The air sending unit 95 in this example is configured to send air to the first discharged material 47-1. The air sending unit 95 is, for example, an air sending fan or an air sending blower. The air sending unit 95 may send air into the first storage unit 82 and to the outside of the first discharged material 47-1. The air sending unit 95 is configured to send air to the first discharged material 47-1, so that the exhausted liquid 46 contained in the first discharged material 47-1 is easily evaporated. The air sending unit 95 may generate vapor 38 by evaporating said exhausted liquid 46.

When the second storage unit 83 has the air sending unit 95, said air sending unit 95 is configured to send air to the second discharged material 47-2. The air sending unit 95 may send air into the second storage unit 83 and to the outside of the second discharged material 47-2. The air sending unit 95 is configured to send air to the second discharged material 47-2, so that the exhausted liquid 46 contained in the second discharged material 47-2 is easily evaporated. The air sending unit 95 may generate the vapor 38 by evaporating said exhausted liquid 46.

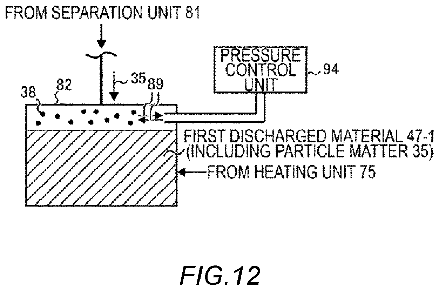

Fig. 12 illustrates another example of the first storage unit 82 in the exhaust gas treatment apparatus for ships 100 illustrated in Fig. 9. The exhaust gas treatment apparatus for ships 100 in this example includes a pressure control unit 94 in place of the second heat exchanger 99 in the example illustrated in Fig. 9. At least one of the first storage unit 82 and the second storage unit 83 may have the pressure control unit 94. In this example, the first storage unit 82 has the pressure control unit 94.

The pressure control unit 94 in this example is configured to control pressure inside the first storage unit 82. Gas inside the first storage unit 82 and outside the first discharged material 47-1 is defined as gas 89. The gas 89 may include the vapor 38. The pressure control unit 94 may control the pressure inside the first storage unit 82 through suction or introduction of the gas 89. The pressure control unit 94 may reduce the pressure inside the first storage unit 82. When the pressure control unit 94 reduces the pressure inside the first storage unit 82, the exhausted liquid 46 contained in the first discharged material 47-1 is easily evaporated. This facilitates reduction of the water content rate R of the first discharged material 47-1 (see Fig. 3).

When the second storage unit 83 has the pressure control unit 94, said pressure control unit 94 is configured to control pressure inside the second storage unit 83. The pressure control unit 94 may control the pressure inside the second storage unit 83 through suction or introduction of the gas 89 inside the second storage unit 83 and outside the second discharged material 47-2. The pressure control unit 94 may reduce the pressure inside the second storage unit 83. When the pressure control unit 94 reduces the pressure inside the second storage unit 83, the exhausted liquid 46 contained in the second discharged material 47-3 is easily evaporated. This facilitates reduction of an water content rate R of the second discharged material 47-2.

The pressure control unit 94 may control the pressure inside the first storage unit 82 based on the water content rate R of the first discharged material 47-1. When the water content rate R of the first discharged material 47-1 is equal to or smaller than a predetermined value, the pressure control unit 94 may increase the water content rate R of the first discharged material 47-1 by increasing the pressure inside the first storage unit 82. Note that the water content rate R of the first discharged material 47-1 may be increased through introduction of the liquid 40 into the first storage unit 82. Said liquid 40 may be liquid 40 other than the liquid 40 circulating in the introduction tube 24, the reaction tower 10, the discharge tube 20, and the circulation tube 22.

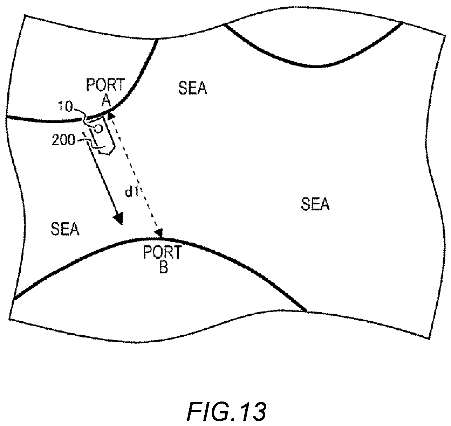

Fig. 13 illustrates one example of an water route of a ship 200. In Fig. 13, a port A and a port B are respectively ports which the ship 200 leaves and arrives in. Distance between the port A and the port B is defined as distance d1. In this example, the reaction tower 10 is mounted on the ship 200.

The heating unit 75 (see Fig. 1) may control the heating of at least one of the first storage unit 82 (see Fig. 2) and the second storage unit 83 (see Fig. 2) based on a navigation schedule of the ship 200. The heating unit 75 is configured to control the heating of at least one of the first storage unit 82 and the second storage unit 83 based on the navigation schedule of the ship 200, which allows the exhaust gas treatment apparatus for ships 100 to easily control the total capacity WM of the first discharged material 47-1 stored in the first storage unit 82 and the total capacity of the second discharged material 47-2 stored in the second storage unit 83.

The heating unit 75 may approximate, based on the distance d1, a total amount of the first discharged material 47-1 discharged from the reaction tower 10. The heating unit 75 may approximate a total amount of the first discharged material 47-1 discharged as the ship 200 sails for the distance d1. The heating unit 75 may control, based on said approximated total amount of the first discharged material 47-1, at least one of the first temperature Te1 and the first period Tp1 at and for which the first storage unit 82 is heated. When the heating unit 75 controls the first period Tp1, the heating unit 75 may further control timing at which the first period Tp1 is started.

The heating unit 75 may approximate, based on the distance d1, a total amount of the second discharged material 47-2 discharged from the reaction tower 10. The heating unit 75 may approximate a total amount of the second discharged material 47-2 discharged as the ship 200 sails for the distance d1. The heating unit 75 may control, based on said approximated total amount of the second discharged material 47-2, at least one of the second temperature Te2 and the second period Tp2 at and for which the second storage unit 83 is heated. When the heating unit 75 controls the second period Tp2, the heating unit 75 may further control timing at which the second period Tp2 is started.

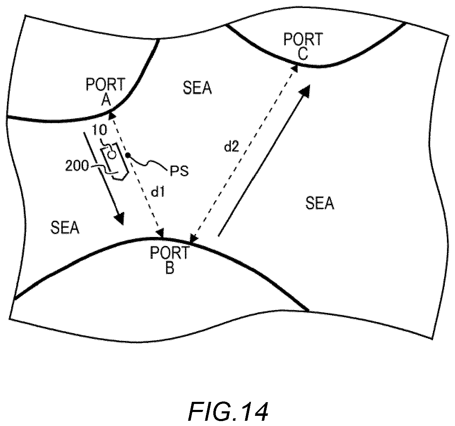

Fig. 14 illustrates another example of the water route of the ship 200. In this example, the ship 200 leaves the port A and then is anchored in the port B, and leaves the port B and then arrives in a port C. It is assumed that the ship 200 is currently sailing at a position PS between the port A and the port B.

The heating unit 75 (see Fig. 1) may heat the first storage unit 82 (see Fig. 2) in at least one of before the ship 200 arrives in port and while the ship 200 is anchored in port. Before the ship 200 arrives in port refers to before the ship 200 sailing in the sea arrives in a port where the ship 200 is scheduled to be next anchored. In this example, the heating unit 75 is configured to heat the first storage unit 82 in at least one of before the ship 200 arrives in the port B and while the ship 200 is anchored in the port B.

As mentioned above, the first discharged material 47-1 is stored in the first storage unit 82. The first storage unit 82 is, for example, a sludge tank. When the heating unit 75 heats the first storage unit 82, the water content rate R of the first discharged material 47-1 (Fig. 3) is easily decreased. When the water content rate R of the first discharged material 47-1 is decreased, the total capacity WM of the first discharged material 47-1 is easily decreased. The first discharged material 47-1 with the total capacity WM decreased is likely to become a lump of particle matter 35. Said lump of particle matter 35 may be possibly unloaded from the ship 200 in a port (the port B and the port C, in this example) where the ship 200 is anchored. In this example, since the heating unit 75 heats the first storage unit 82 before the ship 200 arrives in the port B, the lump of particle matter 35 can be unloaded from the ship 200 shortly after the ship 200 arrives in the port B.

The heating unit 75 may heat the first storage unit 82 while the ship 200 is anchored in the port B. The heating unit 75 is configured to heat the first storage unit 82 while the ship 200 is anchored in the port B, so that, after the lump of particle matter 35 has reached the total capacity WM that can be unloaded from the ship 200, said particle matter 35 can be unloaded from the ship 200.

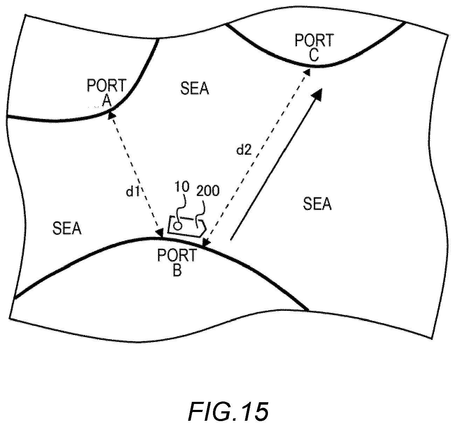

Fig. 15 illustrates another example of the water route of the ship 200. In this example, the ship 200 leaves the port A and then is anchored in the port B, and leaves the port B and then arrives in the port C. It is assumed that the ship 200 is currently anchored in the port B.

The heating unit 75 (see Fig. 1) may heat the second storage unit 83 (see Fig. 2) before the ship 200 leaves port. In this example, the heating unit 75 is configured to heat the second storage unit 83 before the ship 200 leaves the port B.

As mentioned above, the second discharged material 47-2 is stored in the second storage unit 83. The second storage unit 83 is, for example, a storage tank. Since the second storage unit 83 has a heat capacity, it may take a predetermined time before the second discharged material 47-2 starts to be heated after the heating unit 75 starts heating the second storage unit 83. In this example, since the heating unit 75 heats the second storage unit 83 before the ship 200 leaves the port B, the second discharged material 47-2 is easily heated shortly after the second discharged material 47-2 is introduced into the second storage unit 83 after the ship 200 leaves the port B.

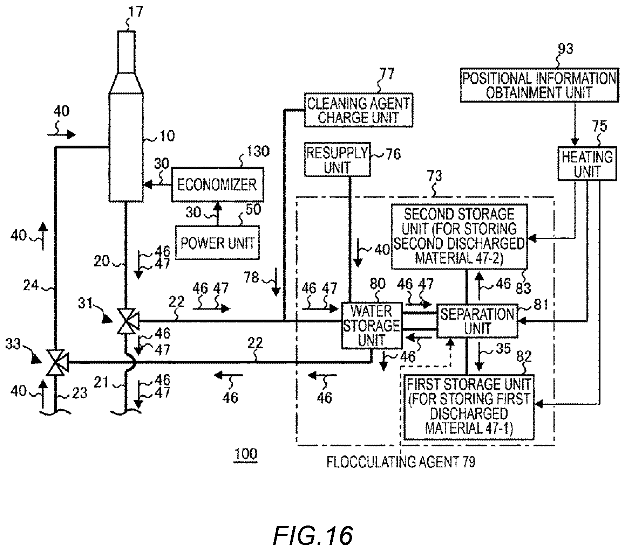

Fig. 16 illustrates another example of the block diagram of the exhaust gas treatment apparatus for ships 100 according to one embodiment of the present invention. The exhaust gas treatment apparatus for ships 100 in this example is different from the exhaust gas treatment apparatus for ships 100 illustrated in Fig. 4 in that the former further includes a positional information obtainment unit 93. In this example, positional information obtained by the positional information obtainment unit 93 is sent to the heating unit 75.

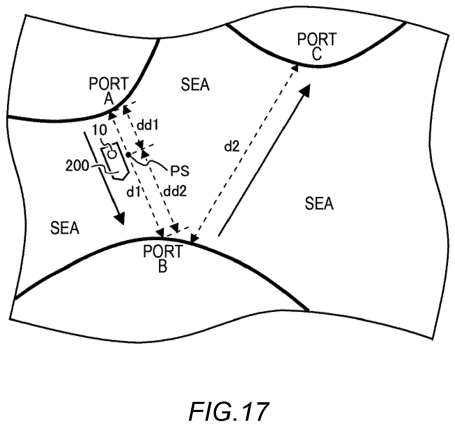

Fig. 17 illustrates another example of the water route of the ship 200. In this example, the ship 200 leaves the port A and then is anchored in the port B, and leaves the port B and then arrives in the port C. It is assumed that the ship 200 is currently navigating at the position PS between the port A and the port B.

The positional information obtainment unit 93 is configured to obtain the current position PS of the ship 200. The positional information obtainment unit 93 is, for example, GPS (Global Positioning System). Distance between the port A and the position PS is defined as distance dd1. Distance between the position PS and the port B is defined as distance dd2. Note that a sum of the distance dd1 and the distance dd2 is the distance d1.

The heating unit 75 may control the heating of at least one of the first storage unit 82 and the second storage unit 83 based on the current position PS of the ship 200 obtained by the positional information obtainment unit 93. The heating unit 75 is configured to control the heating of at least one of the first storage unit 82 and the second storage unit 83 based on said current position PS, which allows the exhaust gas treatment apparatus for ships 100 to easily control, while the ship 200 is navigating, the total capacity WM of the first discharged material 47-1 stored in the first storage unit 82 and the total capacity of the second discharged material 47-2 stored in the second storage unit 83.

The heating unit 75 may approximate, based on distance between the current position PS of the ship 200 and a port where the ship 200 is anchored (a sum of the distance dd2 and distance d2, in this example), the total amount of the first discharged material 47-1 discharged from the reaction tower 10. The heating unit 75 may approximate a total amount of the first discharged material 47-1 discharged as the ship 200 sails for scheduled navigation distance from the current position PS. The heating unit 75 may control, based on said approximated total amount of the first discharged material 47-1, at least one of the first temperature Te1 and the first period Tp1 at and for which the first storage unit 82 is heated. When the heating unit 75 controls the first period Tp1, the heating unit 75 may further control timing at which the first period Tp1 is started.

The heating unit 75 may approximate, based on the distance between the current position PS of the ship 200 and the port where the ship 200 is anchored (the sum of the distance dd2 and distance d2, in this example), the total amount of the second discharged material 47-2 discharged from the reaction tower 10. The heating unit 75 may approximate a total amount of the second discharged material 47-2 discharged as the ship 200 sails for scheduled navigation distance from the current position PS. The heating unit 75 may control, based on said approximated total amount of the second discharged material 47-2, at least one of the second temperature Te2 and the second period Tp2 at and for which the second storage unit 83 is heated. When the heating unit 75 controls the second period Tp2, the heating unit 75 may further control the timing at which the second period Tp2 is started.

The heating unit 75 may control heating of at least one of the first storage unit 82, the second storage unit 83, and the separation unit 81 based on the current position PS of the ship 200 obtained by the positional information obtainment unit 93. The heating unit 75 may control, based on the approximated total amount of the first discharged material 47-1 mentioned above, at least one of the third temperature Te3 and the third period Tp3 at and for which the separation unit 81 is heated. When the heating unit 75 controls the third period Tp3, the heating unit 75 may further control timing at which the third period Tp3 is started.

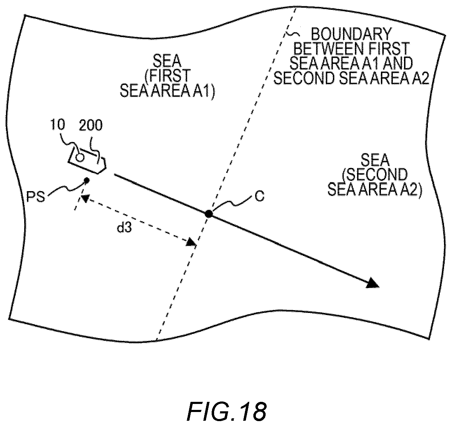

Fig. 18 illustrates another example of the water route of the ship 200. In this example, the ship 200 navigates a first sea area A1, and then navigates a second sea area A2. In Fig. 18, the water route of the ship 200 is indicated by an arrow. A regulation value of a concentration of the particle matter 35 contained in the exhaust gas 30 in the first sea area A1 is defined as a first concentration D1, and a regulation value thereof in the second sea area A2 is defined as a second concentration D2. The second concentration D2 is lower than the first concentration D1. That is, it is assumed that regulation of the concentration of the particle matter 35 in the second sea area A2 is stricter than said regulation in the first sea area A1.

In Fig. 18, a boundary between the first sea area A1 and the second sea area A2 is indicated by a dashed line. A position of an intersection where the water route of the ship 200 meets the boundary between the first sea area A1 and the second sea area A2 is defined as a position C. It is assumed that the ship 200 is currently navigating the position PS in the first sea area A1.

The heating unit 75 (see Fig. 1) may control the heating of at least one of the first storage unit 82 (see Fig. 2) and the second storage unit 83 (see Fig. 2) before the ship 200 navigates the second sea area A2. As mentioned above, the second concentration D2 which is the regulation value in the second sea area A2 is lower than the first concentration D1 which is the regulation value in the first sea area A1. Therefore, an amount of the first discharged material 47-1 stored in the first storage unit 82 per unit time while the ship 200 is navigating the second sea area A2 is likely to be greater than an amount of the first discharged material 47-1 stored in the first storage unit 82 per unit time while the ship 200 is navigating the first sea area A1.

In this example, the heating unit 75 is configured to control the heating of at least one of the first storage unit 82 and the second storage unit 83 before the ship 200 navigates the second sea area A2. Therefore, before the ship 200 navigates the second sea area A2, at least one of the total capacity WM of the first discharged material 47-1 stored in the first storage unit 82 and the total capacity of the second discharged material 47-2 stored in the second storage unit 83 is easily reduced. Therefore, before the ship 200 navigates the second sea area A2, a remaining capacity of the first storage unit 82 and a remaining capacity of the second storage unit 83 are easily increased.

When the ship 200 is navigating the first sea area A1, the positional information obtainment unit 93 (see Fig. 16) may obtain the current position PS of the ship 200. Distance between the current position PS and the position C is defined as distance d3. The distance d3 is distance from the current position PS to the second sea area A2.

When the ship 200 is navigating the first sea area A1, the heating unit 75 may approximate the total amount of the first discharged material 47-1 and the total amount of the second discharged material 47-2 for when the ship 200 navigates for the distance d3. The heating unit 75 may control the heating of at least one of the first storage unit 82 and the second storage unit 83 based on said approximated total amounts of the first discharged material 47-1 and the second discharged material 47-2. The heating unit 75 is configured to control the heating of at least one of the first storage unit 82 and the second storage unit 83 based on the distance d3, so that necessary and sufficient remaining capacities of the first storage unit 82 and the second storage unit 83 are easily secured at a time point where the ship 200 enters the second sea area A2 from the first sea area A1.

The second sea area A2 may be a so-called Emission Control Area (ECA) sea area. The ECA sea area is a sea area where a concentration of at least one of nitrogen oxide (NOx), sulfur oxide (SOx), and particle matter (PM) contained in the exhaust gas 30 is more strictly regulated than in a normal sea area.

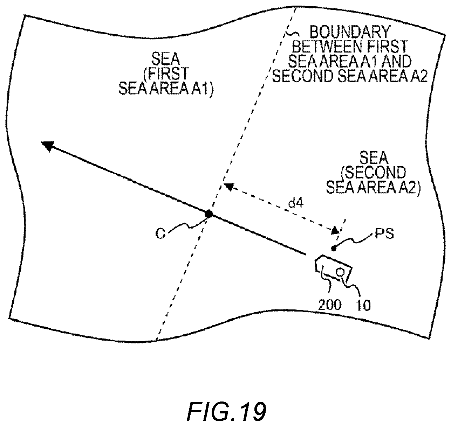

Fig. 19 illustrates another example of the water route of the ship 200. In this example, the ship 200 navigates the second sea area A2, and then navigates the first sea area A1. In Fig. 19, the water route of the ship 200 is indicated by an arrow. The heating unit 75 (see Fig. 1) may control the heating of at least one of the first storage unit 82 (see Fig. 2) and the second storage unit 83 (see Fig. 2) before the ship 200 navigates the first sea area A1.

As mentioned above, the amount of the first discharged material 47-1 stored in the first storage unit 82 per unit time while the ship 200 is navigating the second sea area A2 is likely to be greater than the amount of the first discharged material 47-1 stored in the first storage unit 82 per unit time while the ship 200 is navigating the first sea area A1. Therefore, the heating unit 75 is configured to control the heating of at least one of the first storage unit 82 and the second storage unit 83 before the ship 200 navigates the first sea area A1, so that, before the ship 200 navigates the first sea area A1, at least one of the total capacity WM of the first discharged material 47-1 stored in the first storage unit 82 and the total capacity of the second discharged material 47-2 stored in the second storage unit 83 is easily reduced. Therefore, before the ship 200 navigates the first sea area A1, the remaining capacity of the first storage unit 82 and the remaining capacity of the second storage unit 83 are easily increased.

When the ship 200 is navigating the second sea area A2, the positional information obtainment unit 93 (see Fig. 16) may obtain the current position PS of the ship 200. Distance between the current position PS and the position C is defined as distance d4. The distance d4 is distance from the current position PS to the first sea area A1.

The heating unit 75 may control the heating of at least one of the first storage unit 82 and the second storage unit 83 based on the distance d4. When the ship 200 is navigating the second sea area A2, the heating unit 75 may approximate the total amount of the first discharged material 47-1 and the total amount of the second discharged material 47-2 for when the ship 200 navigates for the distance d4. The heating unit 75 may control the heating of at least one of the first storage unit 82 and the second storage unit 83 based on said approximated total amounts of the first discharged material 47-1 and the second discharged material 47-2. The heating unit 75 is configured to control the heating of at least one of the first storage unit 82 and the second storage unit 83 based on the distance d3, so that necessary and sufficient remaining capacities of the first storage unit 82 and the second storage unit 83 are easily secured at a time point where the ship 200 enters the first sea area A1 from the second sea area A2.

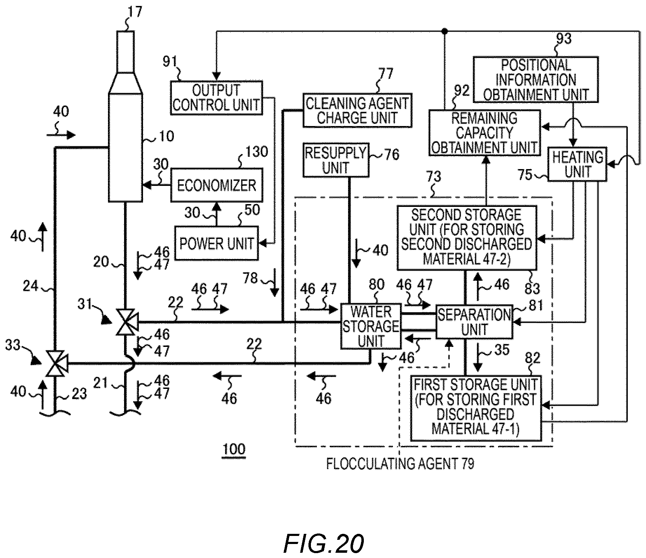

Fig. 20 illustrates another example of the block diagram of the exhaust gas treatment apparatus for ships 100 according to one embodiment of the present invention. The exhaust gas treatment apparatus for ships 100 in this example is different from the exhaust gas treatment apparatus for ships 100 illustrated in Fig. 16 in that the former further includes an output control unit 91 and a remaining capacity obtainment unit 92.

The output control unit 91 is configured to control output of the power unit 50. When the power unit 50 is an engine, the output of the power unit 50 may be rotational speed of the engine or may be a temporal rate of change in the rotational speed of the engine.

The remaining capacity obtainment unit 92 is configured to obtain at least one of the remaining capacity of the first storage unit 82 and the remaining capacity of the second storage unit 83. The remaining capacity of the first storage unit 82 and the remaining capacity of the second storage unit 83 are respectively defined as a remaining capacity RM1 and a remaining capacity RM2. A capacity of the second discharged material 47-2 that can be accommodated by the second storage unit 83 is defined as a capacity C2. As mentioned above, the capacity of the first discharged material 47-1 that can be accommodated by the first storage unit 82 is the capacity C1. The total capacity of the second discharged material 47-2 accommodated in the second storage unit 83 is defined as the total capacity W2. Note that the total capacity of the first discharged material 47-1 accommodated in the first storage unit 82 is the total capacity WM (see Fig. 3).

The remaining capacity RM1 of the first storage unit 82 refers to difference between the capacity C1 and the total capacity WM. When the first storage unit 82 is a sludge tank, the remaining capacity RM1 may be a spatial capacity inside said sludge tank and above the first discharged material 47-1. The remaining capacity RM2 of the second storage unit 83 refers to difference between the capacity C2 and the total capacity W2. When the second storage unit 83 is a storage tank, the remaining capacity RM2 may be a spatial capacity inside said storage tank and above the second discharged material 47-2.

The output control unit 91 may control the output of the power unit 50 based on at least one of the remaining capacity RM1 and the remaining capacity RM2. As mentioned above, the power unit 50 is configured to discharge the exhaust gas 30 (Fig. 1). Said exhaust gas 30 is likely to contain the particle matter 35 (see Fig. 2). When the power unit 50 is an engine, the greater the output of the power unit 50 (the rotational speed of the engine, for example) is, the more easily an amount of the particle matter 35 discharged per unit time is increased.

The remaining capacity obtainment unit 92 may obtain whether the remaining capacity RM1 of the first storage unit 82 is equal to or greater than a predetermined threshold value th1 or less than the threshold value th1. When the remaining capacity RM1 obtained by the remaining capacity obtainment unit 92 is equal to or greater than the threshold value th1, the output control unit 91 may reduce the output of the power unit 50. This allows the exhaust gas treatment apparatus for ships 100 to easily prevent the total capacity WM from reaching the capacity C1 of the first storage unit 82 (prevent the remaining capacity RM1 from becoming zero) before the ship 200 arrives in a port where it is to be anchored (the port B in Fig. 17, for example). When the remaining capacity RM1 obtained by the remaining capacity obtainment unit 92 is less than the threshold value th1, the output control unit 91 may increase the output of the power unit 50.

The remaining capacity obtainment unit 92 may obtain whether the remaining capacity RM2 of the second storage unit 83 is equal to or greater than a predetermined threshold value th2 or less than the threshold value th2. When the remaining capacity RM2 obtained by the remaining capacity obtainment unit 92 is equal to or greater than the threshold value th2, the output control unit 91 may reduce the output of the power unit 50. This allows the exhaust gas treatment apparatus for ships 100 to easily prevent the total capacity of the second discharged material 47-2 from reaching the capacity C2 of the second storage unit 83 (prevent the remaining capacity RM2 from becoming zero) before the ship 200 arrives in a port where it is to be anchored (the port B in Fig. 17, for example). When the remaining capacity RM2 obtained by the remaining capacity obtainment unit 92 is less than the threshold value th2, the output control unit 91 may increase the output of the power unit 50.

As mentioned above, the positional information obtainment unit 93 is configured to obtain the current position PS of the ship 200 (see Fig. 17). The output control unit 91 may control the output of the power unit 50 based on at least one of the current position PS of the ship 200 obtained by the positional information obtainment unit 93, distance between any of one or more ports where the ship is anchored and the current position PS (the distance dd2 in Fig. 17, for example), and at least one of the remaining capacity RM1 and the remaining capacity RM2. This allows the exhaust gas treatment apparatus for ships 100 to control the remaining capacity RM1 and the remaining capacity RM2. This allows the exhaust gas treatment apparatus for ships 100 to prevent the total capacity WM from reaching the capacity C1 of the first storage unit 82 and to easily prevent the total capacity of the second discharged material 47-2 from reaching the capacity C2 of the second storage unit 83 before the ship 200 arrives in a port where it is to be anchored (the port B in Fig. 17, for example).

The heating unit 75 may control the heating of at least one of the first storage unit 82 and the second storage unit 83 based on at least one of the remaining capacity RM1 and the remaining capacity RM2. The heating unit 75 may control the heating of at least one of the first storage unit 82, the second storage unit 83, and the separation unit 81 based on at least one of the remaining capacity RM1 and the remaining capacity RM2.

When the remaining capacity RM1 is equal to or greater than the threshold value th1, the heating unit 75 may heat the first storage unit 82. As mentioned above, when the heating unit 75 heats the first storage unit 82, the total capacity WM of the first discharged material 47-1 is easily reduced. Therefore, the heating unit 75 is configured to heat the first storage unit 82, so that the exhaust gas treatment apparatus for ships 100 can easily prevent the total capacity from reaching the capacity C1 of the first storage unit 82 (prevent the remaining capacity RM1 from becoming zero) before the ship 200 arrives in a port where it is to be anchored (the port B in Fig. 17, for example). When the remaining capacity RM1 is less than the threshold value th1, the heating unit 75 may not or may heat the first storage unit 82.

When the remaining capacity RM2 is equal to or greater than the threshold value th2, the heating unit 75 may heat the second storage unit 83. As mentioned above, when the heating unit 75 heats the second storage unit 83, the total capacity of the second discharged material 47-2 is easily reduced. Therefore, the heating unit 75 is configured to heat the second storage unit 83, so that the exhaust gas treatment apparatus for ships 100 can easily prevent the total capacity of the second discharged material 47-2 from reaching the capacity C2 of the second storage unit 83 (prevent the remaining capacity RM2 from becoming zero) before the ship 200 arrives in a port where it is to be anchored (the port B in Fig. 17, for example). When the remaining capacity RM2 is less than the threshold value th2, the heating unit 75 may not or may heat the second storage unit 83.

In the exhaust gas treatment apparatus for ships 100 in this example, based on at least one of the remaining capacity RM1 and the remaining capacity RM2, the heating unit 75 may control the heating of at least one of the first storage unit 82 and the second storage unit 83 and the output control unit 91 may control the output of the power unit 50. This allows the exhaust gas treatment apparatus for ships 100 to more easily prevent the total capacity WM from reaching the capacity C1 of the first storage unit 82 as well as the capacity of the second discharged material 47-2 from reaching the capacity C2 of the second storage unit 83 before the ship 200 arrives in a port where it is to be anchored (the port B in Fig. 17, for example) than when the heating unit 75 controls the heating of at least one of the first storage unit 82 and the second storage unit 83 or the output control unit 91 controls the output of the power unit 50.

When the ship 200 is navigating the first sea area A1, the output control unit 91 may control the output of the power unit 50 based on at least one of the current position PS of the ship 200, distance between the current position PS and the second sea area A2 (the distance d3 in Fig. 18, for example), and at least one of the remaining capacity RM1 and the remaining capacity RM2. This allows the exhaust gas treatment apparatus for ships 100 to prevent the remaining capacity RM1 from reaching a capacity M1 of the first storage unit 82 and to prevent the remaining capacity RM2 from reaching a capacity M2 of the second storage unit 83 before the ship 200 enters the second sea area A2.

When the ship 200 is navigating the second sea area A2, the output control unit 91 may control the output of the power unit 50 based on at least one of the current position PS of the ship 200, distance between the current position PS and the first sea area A1 (the distance d4 in Fig. 19, for example), and at least one of the remaining capacity RM1 and the remaining capacity RM2. This allows the exhaust gas treatment apparatus for ships 100 to prevent the remaining capacity RM1 from reaching a capacity M1 of the first storage unit 82 and to prevent the remaining capacity RM2 from reaching a capacity M2 of the second storage unit 83 before the ship 200 enters the first sea area A1.

While the embodiments of the present invention have been described, the technical scope of the invention is not limited to the above described embodiments. It is apparent to persons skilled in the art that various alterations and improvements can be added to the above-described embodiments. It is also apparent from the scope of the claims that the embodiments added with such alterations or improvements can be contained in the technical scope of the invention.

The operations, procedures, steps, and stages of each process performed by an apparatus, system, program, and method illustrated in the claims, embodiments, or diagrams can be performed in any order as long as the order is not indicated by "prior to," "before," or the like and as long as the output from a previous process is not used in a later process. Even if the process flow is described using phrases such as "first" or "next" in the claims, embodiments, or diagrams, it does not necessarily mean that the process must be performed in this order.

### (Item 1)

An exhaust gas treatment apparatus for ships comprising:
a reaction tower supplied with exhaust gas containing particle matter and with liquid for treating the exhaust gas and configured to discharge exhausted liquid obtained by treating the exhaust gas; and
a heating unit configured to heat discharged material containing the exhausted liquid to evaporate at least a part of moisture contained in the discharged material.

### (Item 2)

The exhaust gas treatment apparatus for ships according to item 1, further comprising a first storage unit configured to store first one of the discharged material containing the particle matter removed from the exhausted liquid and a part of the exhausted liquid, wherein
the heating unit is configured to heat the first storage unit.

### (Item 3)

The exhaust gas treatment apparatus for ships according to item 1, further comprising a second storage unit configured to store second one of the discharged material containing the exhausted liquid from which at least a part of the particle matter has been removed, wherein
the heating unit is configured to heat the second storage unit.

### (Item 4)

The exhaust gas treatment apparatus for ships according to item 1, further comprising: a first storage unit configured to store first one of the discharged material containing the particle matter removed from the exhausted liquid and a part of the exhausted liquid; and a second storage unit configured to store second one of the discharged material containing the exhausted liquid from which at least a part of the particle matter has been removed, wherein
the heating unit is configured to heat at least one of the first storage unit and the second storage unit.

### (Item 5)

The exhaust gas treatment apparatus for ships according to item 4, wherein
the heating unit is configured to heat the first storage unit and the second storage unit respectively at a first temperature and a second temperature, and
the first temperature is higher than the second temperature.

### (Item 6)

The exhaust gas treatment apparatus for ships according to item 4 or 5, wherein
the heating unit is configured to heat the first storage unit and the second storage unit respectively for a first period and a second period, and
the first period is longer than the second period.

### (Item 7)

The exhaust gas treatment apparatus for ships according to any one of items 4 to 6, wherein
the first storage unit has a plurality of storage tanks for storing the first discharged material, and
the heating unit is configured to control, based on a content rate of moisture contained by first one of the discharged material stored in each of the plurality of storage tanks, temperature at which each of the plurality of storage tanks is heated.

### (Item 8)

The exhaust gas treatment apparatus for ships according to any one of items 4 to 7, further comprising a separation unit introduced with the exhausted liquid and configured to separate the moisture contained in the exhausted liquid and the particle matter, wherein
the particle matter separated by the separation unit is introduced into the first storage unit.

### (Item 9)

The exhaust gas treatment apparatus for ships according to item 8, wherein the heating unit is configured to heat the first storage unit at a first temperature and to heat the separation unit at a third temperature higher than the first temperature.

### (Item 10)

The exhaust gas treatment apparatus for ships according to any one of items 4 to 9, further comprising:
a power unit configured to discharge the exhaust gas; and
a first heat exchanger, wherein the first heat exchanger is configured to exchange heat of the exhausted liquid and heat generated by the power unit.

### (Item 11)

The exhaust gas treatment apparatus for ships according to any one of items 4 to 10, further comprising a second heat exchanger configured to exchange the heat of the exhausted liquid and heat of first one of the discharged material.

### (Item 12)

The exhaust gas treatment apparatus for ships according to any one of items 4 to 11, further comprising a condensation unit, wherein
the heating unit is configured to heat the first storage unit, so that first vapor is generated which is obtained by evaporating at least a part of the exhausted liquid contained in the first discharged material stored in the first storage unit,
the heating unit is configured to heat the second storage unit, so that second vapor is generated which is obtained by evaporating at least a part of the exhausted liquid contained in the second discharged material stored in the second storage unit, and
the condensation unit is configured to condense at least one of the first vapor and the second vapor.

### (Item 13)

The exhaust gas treatment apparatus for ships according to any one of items 4 to 12, further comprising a switching control unit configured to make a switch between supply and non-supply of the exhausted liquid to the reaction tower.

### (Item 14)

The exhaust gas treatment apparatus for ships according to item 13, wherein the heating unit is configured to start heating of at least one of the first storage unit and the second storage unit, before the switching control unit makes a switch such that the exhausted liquid is supplied to the reaction tower.

### (Item 15)

The exhaust gas treatment apparatus for ships according to any one of items 4 to 14, wherein
at least one of the first storage unit and the second storage unit has at least one of a gas supply unit, an air sending unit, and a pressure control unit,
when the first storage unit has at least one of the gas supply unit, the air sending unit, and the pressure control unit, the gas supply unit is configured to supply gas into first one of the discharged material, the air sending unit is configured to send air to first one of the discharged material, and the pressure control unit is configured to control pressure inside the first storage unit, and
when the second storage unit has at least one of the gas supply unit, the air sending unit, and the pressure control unit, the gas supply unit is configured to supply gas into second one of the discharged material, the air sending unit is configured to send air to second one of the discharged material, and the pressure control unit is configured to control pressure inside the second storage unit.

### (Item 16)

The exhaust gas treatment apparatus for ships according to any one of items 4 to 15, wherein
the reaction tower is mounted on a ship, and
the heating unit is configured to control the heating of at least one of the first storage unit and the second storage unit based on a navigation schedule of the ship.

### (Item 17)

The exhaust gas treatment apparatus for ships according to item 16, wherein the heating unit is configured to heat the first storage unit in at least one of before the ship arrives in port and while the ship is anchored in port.

### (Item 18)

The exhaust gas treatment apparatus for ships according to item 16 or 17, wherein the heating unit is configured to heat the second storage unit before the ship leaves port.

### (Item 19)

The exhaust gas treatment apparatus for ships according to any one of items 16 to 18, further comprising a positional information obtainment unit configured to obtain a current position of the ship, wherein
the heating unit is configured to control the heating of at least one of the first storage unit and the second storage unit based on the current position of the ship obtained by the positional information obtainment unit.

### (Item 20)

The exhaust gas treatment apparatus for ships according to item 19, wherein
the ship is configured to navigate a first sea area where a regulation value of a concentration of the particle matter contained in the exhaust gas discharged from the reaction tower is a first concentration and a second sea area where the regulation value of the concentration is a second concentration lower than a first concentration, and
the heating unit is configured to control the heating of at least one of the first storage unit and the second storage unit before the ship navigates the second sea area.

### (Item 21)

The exhaust gas treatment apparatus for ships according to item 19, wherein
the ship is configured to navigate a first sea area where a regulation value of a concentration of the particle matter contained in the exhaust gas discharged from the reaction tower is a first concentration and a second sea area where the regulation value of the concentration is a second concentration lower than a first concentration, and
while the ship is navigating the second sea area, the heating unit is configured to control the heating of at least one of the first storage unit and the second storage unit based on distance between the second sea area and the first sea area.

### (Item 22)

The exhaust gas treatment apparatus for ships according to any one of items 19 to 21, further comprising:
a power unit configured to discharge the exhaust gas,
an output control unit configured to control output of the power unit, and
a remaining capacity obtainment unit configured to obtain at least one of a remaining capacity of the first storage unit and a remaining capacity of the second storage unit, wherein
the output control unit is configured to control the output of the power unit based on at least one of the remaining capacity of the first storage unit and the remaining capacity of the second storage unit obtained by the remaining capacity obtainment unit.

### (Item 23)

The exhaust gas treatment apparatus for ships according to any one of items 19 to 21, further comprising a remaining capacity obtainment unit configured to obtain at least one of a remaining capacity of the first storage unit and a remaining capacity of the second storage unit, wherein
the heating unit is configured to control the heating of at least one of the first storage unit and the second storage unit based on at least one of the remaining capacity of the first storage unit and the remaining capacity of the second storage unit obtained by the remaining capacity obtainment unit.

### (Item 24)

The exhaust gas treatment apparatus for ships according to item 23, further comprising:
a power unit configured to discharge the exhaust gas; and
an output control unit configured to control output of the power unit, wherein
the output control unit is configured to control the output of the power unit based on at least one of the remaining capacity of the first storage unit and the remaining capacity of the second storage unit obtained by the remaining capacity obtainment unit.

### (Item 25)

The exhaust gas treatment apparatus for ships according to item 22 or 24, wherein the output control unit is configured to control the output of the power unit based on at least one of the current position of the ship obtained by the positional information obtainment unit, distance between any of one or more ports where the ship is anchored and the current position, and at least one of the remaining capacity of the first storage unit and the remaining capacity of the second storage unit obtained by the remaining capacity obtainment unit.

### (Item 2-1)

A resupply unit configured to resupply the liquid is further provided, and
the storage unit is configured to control, based on a concentration of sulfur oxide ions contained in the exhausted liquid, an amount of the exhausted liquid stored in the storage unit per unit time and an amount of the liquid resupplied from the resupply unit to the discharged material per unit time.

### (Item 2-2)

The heating unit is configured to heat the first storage unit and the third storage unit respectively for a first period and a third period, and
the third period is longer than the first period.

### (Item 2-3)

The heating unit is configured to start heating the separation unit, before the switching control unit makes a switch such that the exhausted liquid is supplied to the reaction tower.

### (Item 2-4)

The heating unit is configured to control heating of at least one of the first storage unit, the second storage unit, and the separation unit based on the current position of the ship obtained by the positional information obtainment unit.

### (Item 2-5)

The heating unit is configured to approximate, based on distance between the current position and a port where the ship is anchored, a total amount of the discharged material discharged from the reaction tower, and
the heating unit is configured to control, based on the approximated total amount of the discharged material, at least one of the third temperature and the third period at and for which the separation unit is heated.

### (Item 2-6)

When the ship is navigating the first sea area, the heating unit is configured to approximate a total amount of the discharged material based on distance between the current position of the ship and the second sea area, and
the heating unit is configured to control the heating of at least one of the first storage unit and the second storage unit based on the approximated total amount of the discharged material.

### (Item 2-7)

When the ship is navigating the second sea area, the heating unit is configured to approximate a total amount of the discharged material based on distance between the current position of the ship and the first sea area, and
the heating unit is configured to control the heating of at least one of the first storage unit and the second storage unit based on the approximated total amount of the discharged material.

### EXPLANATION OF REFERENCES

10: reaction tower, 11: exhaust gas introduction port, 12: trunk tube, 13: branch tube, 14: ejection unit, 15: side wall, 16: bottom surface, 17: exhaust gas discharge port, 18: gas treatment unit, 19: liquid discharge port, 20: discharge tube, 21: discharge tube, 22: circulation tube, 23: introduction tube, 24: introduction tube, 30: exhaust gas, 31: switching unit, 32: exhaust gas introduction tube, 33: switching unit, 34: switching unit, 35: particle matter, 36: switching unit, 37: gas, 38: vapor, 40: liquid, 41: first vapor, 42: second vapor, 43: liquid, 46: exhausted liquid, 47: discharged material, 48: discharged material, 50: power unit, 60: introduction pump, 61: circulation pump, 70: volumeric flow rate control unit, 72: valve, 73: storage unit, 74: switching control unit, 75: heating unit, 76: resupply unit, 77: cleaning agent charge unit, 78: cleaning agent, 79: flocculating agent, 80: water storage unit, 81: separation unit, 82: first storage unit, 83: second storage unit, 84: storage tank, 85: clarification unit, 86: dehydration unit, 89: gas, 90: condensation unit, 91: output control unit, 92: remaining capacity obtainment unit, 93: positional information obtainment unit, 94: pressure control unit, 95: air sending unit, 96: gas supply unit, 97: fuel supply unit, 98: first heat exchanger, 99: second heat exchanger, 100: exhaust gas treatment apparatus for ships, 130: economizer, 200: ship

## Claims

1. An exhaust gas treatment apparatus for ships comprising:
a reaction tower supplied with exhaust gas containing particle matter and with liquid for treating the exhaust gas and configured to discharge exhausted liquid obtained by treating the exhaust gas; and
a heating unit configured to heat discharged material containing the exhausted liquid to evaporate at least a part of moisture contained in the discharged material.

2. The exhaust gas treatment apparatus for ships according to claim 1, further comprising a first storage unit configured to store first one of the discharged material containing the particle matter removed from the exhausted liquid and a part of the exhausted liquid, wherein
the heating unit is configured to heat the first storage unit.

3. The exhaust gas treatment apparatus for ships according to claim 1, further comprising a second storage unit configured to store second one of the discharged material containing the exhausted liquid from which at least a part of the particle matter has been removed, wherein
the heating unit is configured to heat the second storage unit.

4. The exhaust gas treatment apparatus for ships according to claim 1, further comprising: a first storage unit configured to store first one of the discharged material containing the particle matter removed from the exhausted liquid and a part of the exhausted liquid; and a second storage unit configured to store second one of the discharged material containing the exhausted liquid from which at least a part of the particle matter has been removed, wherein
the heating unit is configured to heat at least one of the first storage unit and the second storage unit.

5. The exhaust gas treatment apparatus for ships according to claim 4, wherein
the heating unit is configured to heat the first storage unit and the second storage unit respectively at a first temperature and a second temperature, and
the first temperature is higher than the second temperature.

6. The exhaust gas treatment apparatus for ships according to claim 4 or 5, wherein
the heating unit is configured to heat the first storage unit and the second storage unit respectively for a first period and a second period, and
the first period is longer than the second period.

7. The exhaust gas treatment apparatus for ships according to any one of claims 4 to 6, wherein
the first storage unit has a plurality of storage tanks for storing the first discharged material, and
the heating unit is configured to control, based on a content rate of moisture contained by first one of the discharged material stored in each of the plurality of storage tanks, temperature at which each of the plurality of storage tanks is heated.

8. The exhaust gas treatment apparatus for ships according to any one of claims 4 to 7, further comprising a separation unit introduced with the exhausted liquid and configured to separate the moisture contained in the exhausted liquid and the particle matter, wherein
the particle matter separated by the separation unit is introduced into the first storage unit.

9. The exhaust gas treatment apparatus for ships according to claim 8, wherein the heating unit is configured to heat the first storage unit at a first temperature and to heat the separation unit at a third temperature higher than the first temperature.

10. The exhaust gas treatment apparatus for ships according to any one of claims 4 to 9, further comprising:
a power unit configured to discharge the exhaust gas; and
a first heat exchanger, wherein the first heat exchanger is configured to exchange heat of the exhausted liquid and heat generated by the power unit.

11. The exhaust gas treatment apparatus for ships according to any one of claims 4 to 10, further comprising a second heat exchanger configured to exchange the heat of the exhausted liquid and heat of first one of the discharged material.

12. The exhaust gas treatment apparatus for ships according to any one of claims 4 to 11, further comprising a condensation unit, wherein
the heating unit is configured to heat the first storage unit, so that first vapor is generated which is obtained by evaporating at least a part of the exhausted liquid contained in the first discharged material stored in the first storage unit,
the heating unit is configured to heat the second storage unit, so that second vapor is generated which is obtained by evaporating at least a part of the exhausted liquid contained in the second discharged material stored in the second storage unit, and
the condensation unit is configured to condense at least one of the first vapor and the second vapor.

13. The exhaust gas treatment apparatus for ships according to any one of claims 4 to 12, further comprising a switching control unit configured to make a switch between supply and non-supply of the exhausted liquid to the reaction tower.

14. The exhaust gas treatment apparatus for ships according to claim 13, wherein the heating unit is configured to start heating of at least one of the first storage unit and the second storage unit, before the switching control unit makes a switch such that the exhausted liquid is supplied to the reaction tower.

15. The exhaust gas treatment apparatus for ships according to any one of claims 4 to 14, wherein
at least one of the first storage unit and the second storage unit has at least one of a gas supply unit, an air sending unit, and a pressure control unit,
when the first storage unit has at least one of the gas supply unit, the air sending unit, and the pressure control unit, the gas supply unit is configured to supply gas into first one of the discharged material, the air sending unit is configured to send air to first one of the discharged material, and the pressure control unit is configured to control pressure inside the first storage unit, and
when the second storage unit has at least one of the gas supply unit, the air sending unit, and the pressure control unit, the gas supply unit is configured to supply gas into second one of the discharged material, the air sending unit is configured to send air to second one of the discharged material, and the pressure control unit is configured to control pressure inside the second storage unit.

16. The exhaust gas treatment apparatus for ships according to any one of claims 4 to 15, wherein
the reaction tower is mounted on a ship, and
the heating unit is configured to control the heating of at least one of the first storage unit and the second storage unit based on a navigation schedule of the ship.

17. The exhaust gas treatment apparatus for ships according to claim 16, wherein the heating unit is configured to heat the first storage unit in at least one of before the ship arrives in port and while the ship is anchored in port.

18. The exhaust gas treatment apparatus for ships according to claim 16 or 17, wherein the heating unit is configured to heat the second storage unit before the ship leaves port.

19. The exhaust gas treatment apparatus for ships according to any one of claims 16 to 18, further comprising a positional information obtainment unit configured to obtain a current position of the ship, wherein
the heating unit is configured to control the heating of at least one of the first storage unit and the second storage unit based on the current position of the ship obtained by the positional information obtainment unit.

20. The exhaust gas treatment apparatus for ships according to claim 19, wherein
the ship is configured to navigate a first sea area where a regulation value of a concentration of the particle matter contained in the exhaust gas discharged from the reaction tower is a first concentration and a second sea area where the regulation value of the concentration is a second concentration lower than a first concentration, and
the heating unit is configured to control the heating of at least one of the first storage unit and the second storage unit before the ship navigates the second sea area.

21. The exhaust gas treatment apparatus for ships according to claim 19, wherein
the ship is configured to navigate a first sea area where a regulation value of a concentration of the particle matter contained in the exhaust gas discharged from the reaction tower is a first concentration and a second sea area where the regulation value of the concentration is a second concentration lower than a first concentration, and
while the ship is navigating the second sea area, the heating unit is configured to control the heating of at least one of the first storage unit and the second storage unit based on distance between the second sea area and the first sea area.

22. The exhaust gas treatment apparatus for ships according to any one of claims 19 to 21, further comprising:
a power unit configured to discharge the exhaust gas,
an output control unit configured to control output of the power unit, and
a remaining capacity obtainment unit configured to obtain at least one of a remaining capacity of the first storage unit and a remaining capacity of the second storage unit, wherein
the output control unit is configured to control the output of the power unit based on at least one of the remaining capacity of the first storage unit and the remaining capacity of the second storage unit obtained by the remaining capacity obtainment unit.

23. The exhaust gas treatment apparatus for ships according to any one of claims 19 to 21, further comprising a remaining capacity obtainment unit configured to obtain at least one of a remaining capacity of the first storage unit and a remaining capacity of the second storage unit, wherein
the heating unit is configured to control the heating of at least one of the first storage unit and the second storage unit based on at least one of the remaining capacity of the first storage unit and the remaining capacity of the second storage unit obtained by the remaining capacity obtainment unit.

24. The exhaust gas treatment apparatus for ships according to claim 23, further comprising:
a power unit configured to discharge the exhaust gas; and
an output control unit configured to control output of the power unit, wherein
the output control unit is configured to control the output of the power unit based on at least one of the remaining capacity of the first storage unit and the remaining capacity of the second storage unit obtained by the remaining capacity obtainment unit.

25. The exhaust gas treatment apparatus for ships according to claim 22 or 24, wherein the output control unit is configured to control the output of the power unit based on at least one of the current position of the ship obtained by the positional information obtainment unit, distance between any of one or more ports where the ship is anchored and the current position, and at least one of the remaining capacity of the first storage unit and the remaining capacity of the second storage unit obtained by the remaining capacity obtainment unit.
